(19) Europäisches Patentamt / European Patent Office / Office européen des brevets

(11) **EP 4 231 005 B1**

(12) **EUROPÄISCHE PATENTSCHRIFT**

(45) Veröffentlichungstag und Bekanntmachung des Hinweises auf die Patenterteilung:
**27.08.2025   Patentblatt 2025/35**

(21) Anmeldenummer: **23153855.4**

(22) Anmeldetag: **30.01.2023**

(51) Internationale Patentklassifikation (IPC):
**G01N 27/64** *(2006.01)*        **G01N 27/66** *(2006.01)*

(52) Gemeinsame Patentklassifikation (CPC):
**G01N 27/64**

(54) **PHOTO-IONISATIONS-DETEKTOR (PID) MIT MEHREREN MESSZELLEN UND VERFAHREN UNTER VERWENDUNG EINES SOLCHEN PIDS**

PHOTO-IONIZATION DETECTOR (PID) INCLUDING A PLURALITY OF MEASUREMENT CELLS AND METHOD USING SUCH A PID

DÉTECTEUR À PHOTO-IONISATION (PID) AVEC PLUSIEURS CELLULES DE MESURE ET PROCÉDÉ UTILISANT UN TEL PID

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:   **18.02.2022   DE 102022103919**
                   **05.07.2022   DE 102022116682**

(43) Veröffentlichungstag der Anmeldung:
**23.08.2023   Patentblatt 2023/34**

(73) Patentinhaber: **Dräger Safety AG & Co. KGaA
23560 Lübeck (DE)**

(72) Erfinder:
• **Blöcker, Tim
  23558 Lübeck (DE)**
• **Pfennig, Lucas
  23558 Lübeck (DE)**

(74) Vertreter: **Meyer-Gramann, Klaus Dieter
Drägerwerk Safety AG & Co. KGaA
Revalstraße 1
23560 Lübeck (DE)**

(56) Entgegenhaltungen:
**EP-A2- 1 262 770      US-B1- 10 101 298
US-B1- 6 320 388**

EP 4 231 005 B1

**Beschreibung**

**Beschreibung**

Die Erfindung betrifft einen Photo-Ionisations-Detektor und ein Verfahren zum Detektieren einer ionisierbaren Substanz in einem Gas.

Ein Photo-Ionisations-Detektor (PID), wie er aus dem Stand der Technik bekannt ist, umfasst eine Messelektrode sowie eine Strahlungsquelle, welche elektromagnetische Strahlung, insbesondere UV-Licht, in eine Messstrecke hinein emittiert. Eine Probe des zu untersuchenden Gases befindet sich in dieser Messstrecke. Die emittierte Strahlung ionisiert Moleküle einer ionisierbaren Substanz, wobei die ionisierbare Substanz sich als Teil eines Gases in der Messstrecke befindet. Die Ionisierung verändert eine elektrische Eigenschaft der Messelektrode. Ein Sensor misst ein Maß für diese veränderbare elektrische Eigenschaft. Auch der erfindungsgemäße PID und das erfindungsgemäße Verfahren nutzen dieses Prinzip.

Unterschiedliche PIDs sind bekannt geworden.

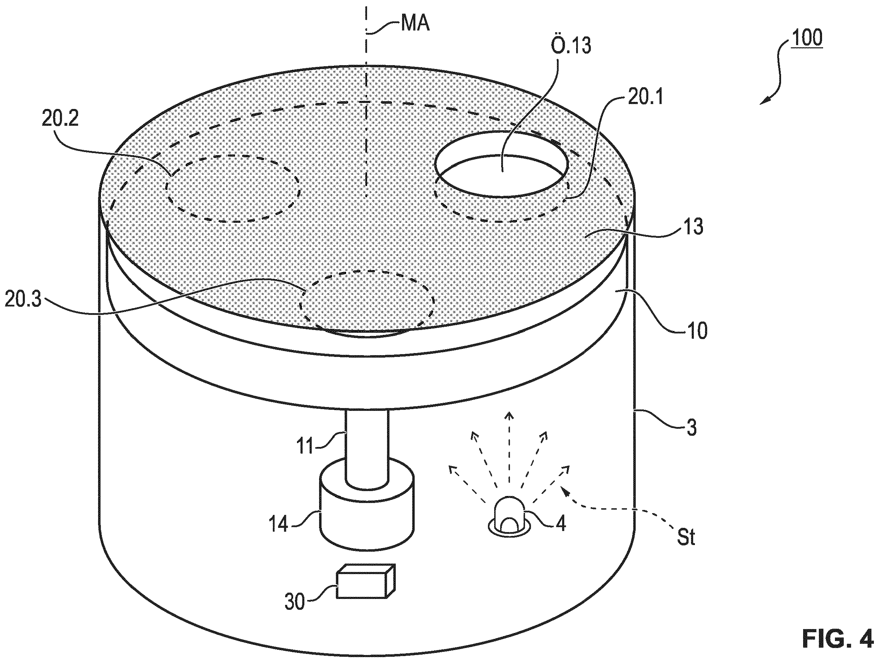

In US 10,101,298 B1 wird ein PID beschrieben, der eine Mess-Anordnung (chamber assembly 400) mit drei Messkammern (chambers 401, 402, and 403) sowie eine Strahlungsquelle (radiation source assembly 407 with UV lamp 408) umfasst, vgl. Fig. 4. In jeder Messkammer 401, 402, 403 sind jeweils zwei Elektroden angeordnet. Die Messkammer 401 steht dauerhaft in einer Fluidverbindung mit der Umgebung, und eine Pumpe 409 kann zu untersuchendes Gas durch diese Fluidverbindung hindurch in die Messkammer 401 saugen. Die Messkammern 402 und 403 sind mit jeweils einem Referenzgas gefüllt und von der Umgebung getrennt. Ein Antrieb 406 vermag die Mess-Anordnung 400 zu drehen und dadurch zu bewirken, dass die elektromagnetische Strahlung, welche die Strahlungsquelle 407 emittiert, je nach Rotationsposition der Mess-Anordnung 400 die Messkammer 401 oder die Messkammer 402 oder die Messkammer 403 erreicht. Mithilfe der Messkammern 402 und 403 lässt der PID sich kalibrieren.

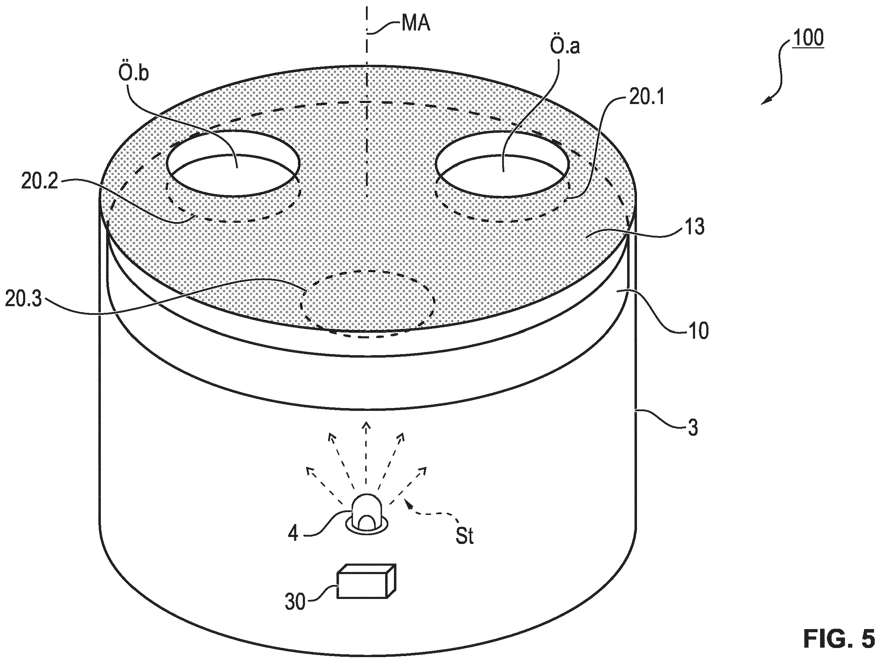

Der PID von WO 94/27141 A1 umfasst drei Strahlungsquellen in Form von drei gas discharge lamps 11a, 11b and 11c, vgl. Fig. 5. Diese Strahlungsquellen 11a, 11b, 11c können elektromagnetische Strahlung mit unterschiedlichen Photonen-Energien emittieren. Jeder Strahlungsquelle 11a, 11b, 11c ist jeweils eine Messeinheit mit einer electrode 23a, 23b, 23c, einer mesh electrode 22a, 22b, 22c und einem electrometer 29a, 20 29b, 29c zugeordnet. Das zu untersuchende Gas wird entlang eines Pfads geleitet, der sich zwischen den drei Strahlungsquelle auf der einen Seite und den drei Messeinheiten auf der anderen Seite erstreckt.

DE 198 28 903 A1 zeigt einen PID 1 mit einer Anode 15 und einer Kathode 3, vgl. Fig. 3. Eine Strahlungsquelle in Form einer UV-Lampe 2 emittiert elektromagnetische Strahlung in Richtung des PIDs 1. Zwischen der Strahlungsquelle 2 und dem PID 1 ist ein mechanischer Chopper 10 angeordnet. Ein Motorantrieb 11 dreht den Chopper 10, und dadurch wird das einfallende UV-Licht zyklisch unterbrochen.

Der Erfindung liegt die Aufgabe zugrunde, einen Photo-Ionisations-Detektor und ein Verfahren bereitzustellen, die eine höhere Zuverlässigkeit als bekannte Photo-Ionisations-Detektoren und Verfahren aufweisen.

Die Aufgabe wird durch einen Photo-Ionisations-Detektor mit den Merkmalen des Anspruchs 1 und durch ein Verfahren mit den Merkmalen des Anspruchs 13 gelöst. Vorteilhafte Ausgestaltungen des erfindungsgemäßen Photo-Ionisations-Detektors sind, soweit sinnvoll, auch vorteilhafte Ausgestaltungen des erfindungsgemäßen Verfahrens und umgekehrt.

Der erfindungsgemäße Photo-Ionisations-Detektor (im Folgenden: PID) und das erfindungsgemäße Verfahren vermögen zu detektieren, ob in einem Gas eine ionisierbare Substanz vorhanden ist oder nicht. Dadurch vermögen der PID und das Verfahren einen räumlichen Bereich auf das Vorhandensein der ionisierbaren Substanz zu überwachen. Das zu untersuchende Gas (genauer gesagt: eine Gasprobe dieses Gases) befindet sich in einer Umgebung des PIDs und kann das Innere des PID erreichen und lässt sich dort von einer Messzelle des PIDs analysieren.

Der erfindungsgemäße Photo-Ionisations-Detektor (im Folgenden: PID) umfasst eine Strahlungsquelle. Diese Strahlungsquelle vermag elektromagnetische Strahlung zu emittieren. Die emittierte elektromagnetische Strahlung vermag eine zu detektierende ionisierbare Substanz zu ionisieren. Unter "Ionisierung" wird ein Vorgang verstanden, bei dem unter dem Einfluss von elektromagnetischer Strahlung ein Molekül aufgespalten wird, und zwar in mindestens ein elektrisch negativ geladenes Elektron und ein positiv geladenes Ion, nämlich das Molekül ohne das abgespaltene Elektron oder ohne die abgespaltenen Elektronen.

Weiterhin umfasst der erfindungsgemäße Photo-Ionisations-Detektor einen Messzellen-Träger und mindestens zwei verschiedene Messzellen, bevorzugt mindestens drei verschiedene Messzellen. Jede dieser mindestens zwei Messzellen ist auf dem Messzellen-Träger montiert, und zwar bevorzugt so, dass die Messzelle sich nicht relativ zum Messzellen-Träger bewegen kann. Daher kann auch eine Messzelle sich nicht relativ zu einer anderen Messzelle auf dem Messzellen-Träger bewegen. Erfindungsgemäß trennt der Messzellen-Träger die Messzellen fluiddicht voneinander. Möglich ist, dass der PID zusätzlich eine Messzelle hat, die nicht auf dem Messzellen-Träger montiert ist.

Jede Messzelle umfasst jeweils eine Messelektrode und bevorzugt jeweils eine Gegenelektrode. Die Messelektrode weist eine messbare elektrische Eigenschaft auf, beispielsweise die Stärke oder die Menge (elektrische Ladung) des durch die Messelektrode fließenden elektrischen Stroms oder eine elektrische Spannung zwischen der Messelektrode und der optionalen Gegenelektrode oder eine elektrische Spannung zwischen zwei Messstellen der Messelektrode oder auch den elektrischen Widerstand der Messelektrode. Eine Ionisierung von ionisierbarer Substanz im Gas verändert wenigstens zeitweise diese messbare elektrische Eigenschaft verglichen mit einem Zustand ohne ionisierbarer Substanz. Die messbare elektrische Eigenschaft einer Messzelle wird dann verändert, wenn sich eine ausreichend große Menge von ionisierbarer Substanz in einem Bereich im Inneren des PIDs befindet, wobei der Bereich an die Messzelle angrenzt, verglichen mit einem Zustand ohne ionisierbarer Substanz. Bevorzugt wird die messbare Eigenschaft umso stärker verändert, je größer die Konzentration von ionisierbare Substanz ist.

Die Messzelle vermag abhängig von der elektrischen Eigenschaft ein Signal zu erzeugen, bevorzugt ein elektrisches Signal. Dieses erzeugte Signal korreliert mit dem Vorhandensein und optional mit der Konzentration von ionisierbarer Substanz in dem Gas.

Anmerkung: In dem zu untersuchenden Gas können gleichzeitig mehrere zu detektierende ionisierbare Substanzen vorhanden sein. Wenn im Folgenden von "dem Vorhandensein" und "der Konzentration" von ionisierbarer Substanz die Rede ist, so ist damit das Vorhandensein mindestens einer zu detektierenden ionisierbaren Substanz sowie im Falle von mehreren ionisierbare Substanzen die Summe der Konzentrationen aller zu detektierenden ionisierenden Substanzen gemeint.

Jeder Messzelle auf dem Messzellen-Träger ist jeweils ein Zustand des PIDs zugeordnet. Diese Zustände unterscheiden sich voneinander. Der PID lässt sich wahlweise in jedem dieser Zustände betreiben. Genauer gesagt: Der PID lässt sich wahlweise in einem Zustand von mindestens zwei verschiedenen möglichen Zuständen betreiben. "Wahlweise" bedeutet: Der PID lässt sich in jedem möglichen Zustand betreiben, der einer Messzelle zugeordnet ist, und zu jedem Zeitpunkt während eines Einsatzes befindet der PID sich in genau einem dieser Zustände - oder in einem optionalen Zwischen-Zustand zwischen zwei dieser Zustände oder auch einem optionalen Ruhezustand, also in einem Zustand, der keiner Messzelle zugeordnet ist und in dem keine Messzelle aktiv ist und ein Signal generiert. Falls auf dem Messzellen-Träger N Messzellen (N >= 2) montiert sind, so lässt sich der PID in jedem Zustand von mindestens N verschiedenen möglichen Zuständen betreiben. Dies gilt mindestens dann, wenn der PID und insbesondere alle Messzellen intakt sind.

Wenn der PID in demjenigen Zustand betrieben wird, der der Messzelle x auf dem Messzellen-Träger zugeordnet ist, so weist der erfindungsgemäße PID die folgenden Eigenschaften auf:

- Eine Fluidverbindung (Fluidkommunikation) zwischen der Umgebung des PIDs und der Messzelle x ist hergestellt. Daher kann das zu untersuchende Gas diese Messzelle x erreichen. Möglich ist, dass diese Umgebung direkt an den PID angrenzt. Möglich ist auch , dass zu untersuchendes Gas durch eine Fluidführungseinheit hindurch zum PID und in das Innere des PIDs gefördert wird.
- Das Gas kann mindestens eine andere Messzelle y mit y ≠ x nicht erreichen, weil diese andere Messzelle y fluiddicht von der Umgebung getrennt ist. Bevorzugt ist jede andere Messzelle y mit y ≠ x von der Umgebung getrennt, sodass das zu untersuchende Gas aus der Umgebung ausschließlich die Messzelle x erreichen kann.
- Außerdem erreicht in diesem Zustand wenigstens ein Teil der elektromagnetischen Strahlung, welche die Strahlungsquelle emittiert, die Messzelle x. Bevorzugt erreicht mindestens die Hälfte, besonders bevorzugt mindestens drei Viertel, der Energie der emittierten elektromagnetischen Strahlung die Messzelle x. Möglich ist auch, dass die emittierte elektromagnetische Strahlung ausschließlich die Messzelle x erreicht.

Das erfindungsgemäße Verfahren wird unter Verwendung eines erfindungsgemäßen PIDs durchgeführt und umfasst die folgenden Schritte:
Nacheinander werden wenigstens zwei verschiedene Zustände hergestellt, wobei jeder Zustand jeweils einer Messzelle zugeordnet ist. Bevorzugt werden nacheinander N verschiedene Zustände hergestellt, wobei auf dem Messzellen-Träger N Messzellen montiert sind und jeder Zustand jeweils einer Messzelle auf dem Messzellen-Träger zugeordnet ist. Der Vorgang, einen bestimmten Zustand herzustellen, kann automatisch oder durch eine Benutzereingabe ausgelöst werden.

Der Schritt, dass der PID in demjenigen Zustand betrieben wird, der der Messzelle x zugeordnet ist, umfasst die folgenden Schritte:

- Das zu untersuchende Gas aus der Umgebung erreicht die Messzelle x. Mindestens eine weitere Messzelle ist von der Umgebung getrennt, so dass das Gas nicht diese weitere Messzelle erreicht. Bevorzugt erreicht das Gas nur die Messzelle x und keine andere Messzelle auf dem Messzellen-Träger.
- Die Strahlungsquelle emittiert ionisierende elektromagnetische Strahlung auf den Messzellen-Träger zu. Wenigstens ein Teil der emittierten elektromagnetischen Strahlung erreicht ebenfalls die Messzelle x.
- Die Ionisierung einer ionisierbaren Substanz im Gas verändert die messbare elektrische Eigenschaft der Messzelle x verglichen mit einem Zustand ohne eine ausreichende Menge ionisierbarer Substanz. Dieser Effekt wird hervorgerufen, weil die Messzelle x in einer Fluidverbindung mit der Umgebung steht und daher von dem zu untersuchenden Gas erreicht wird.
- Die Messzelle x erzeugt ein Signal, und zwar abhängig von der elektrischen Eigenschaft der Messelektrode der Messzelle x. Das Signal korreliert mit dem Vorhandensein und optional mit der Konzentration von ionisierbarer Substanz im Gas.

Erfindungsgemäß umfasst der PID mindestens zwei Messzellen, aber nur eine Strahlungsquelle. In jedem Zustand, der einer Messzelle auf dem Messzellen-Träger zugeordnet ist, wird dieselbe Strahlungsquelle verwendet und emittiert elektromagnetische Strahlung auf den Messzellen-Träger zu. Jeder Messzelle ist erfindungsgemäß jeweils ein Zustand zugeordnet, in dem der PID sich betreiben lässt und bei dem das zu untersuchende Gas und die elektromagnetische Strahlung, die von derselben Strahlungsquelle emittiert wird, diese Messzelle erreichen.

Der erfindungsgemäße PID und das erfindungsgemäße Verfahren führen insbesondere zu folgenden Vorteilen:

- Der erfindungsgemäße PID umfasst wenigstens zwei Messzellen, aber nur eine Strahlungsquelle. Wenigstens eine dieser wenigstens zwei Messzellen steht dann, wenn der PID im zugeordneten Zustand betrieben wird, in jeweils einer Fluidverbindung mit der Umgebung, optional wenigstens zwei Messzellen. Wenigstens eine weitere Messzelle ist von der Umgebung getrennt. In vielen Fällen ist die Lebensdauer einer Messzelle geringer als die Lebensdauer der Strahlungsquelle und der oder wenigstens einiger sonstigen Bestandteile des PIDs. Die Erfindung erhöht also die Lebensdauer eines erfindungsgemäßen PIDs verglichen mit einem PID, der nur eine einzige Messzelle umfasst.
- In vielen Fällen ist es dann, wenn eine Messzelle des erfindungsgemäßen PIDs ausgefallen ist, immer noch möglich, den PID weiter zu benutzen, nämlich mit der oder jeder noch intakten Messzelle. Dank der Erfindung ist es insbesondere zwar möglich, aber nicht erforderlich, eine defekte Messzelle sofort durch eine intakte zu ersetzen, um den PID weiterbenutzen zu können, oder gar den gesamten PID auszutauschen. Auch dieses Merkmal verlängert also in vielen Fällen die Lebensdauer des erfindungsgemäßen PIDs verglichen mit anderen PIDs.
- Der erfindungsgemäße PID mit mehreren Messzellen verbraucht in der Regel nicht oder nicht erheblich mehr elektrische Energie als ein PID mit nur einer Messzelle. Der größte elektrische Verbraucher eines PIDs ist nämlich in der Regel die Strahlungsquelle und nicht eine Messzelle. Auch der erfindungsgemäße PID hat nur eine Strahlungsquelle. Die Messzellen lassen sich oft als passive elektrische Bauteile realisieren, welche keine elektrische Energie verbrauchen.
- Weil auch der erfindungsgemäße PID bevorzugt nur eine Strahlungsquelle aufweist, aber nicht mehrere Strahlungsquellen, braucht auch nur eine Strahlungsquelle justiert und kalibriert und überwacht zu werden. Häufig erfordern außerdem mehrere Strahlungsquellen in einem einzigen PID mehr Platz und mehr elektrische Energie als nur eine einzige. In manchen Fällen führen mehrere Strahlungsquellen dazu, dass mehr Wärmeenergie erzeugt und abgestrahlt wird. Ein PID mit mehreren Strahlungsquellen hat außerdem oft ein höheres Gewicht.

Der erfindungsgemäße PID ist wie folgt ausgestaltet: Wenn der PID in demjenigen Zustand betrieben wird, der einer Messzelle x zugeordnet ist, so erreicht wenigstens ein Teil der emittierten elektromagnetischen Strahlung diese Messzelle x. Bevorzugt erreicht - gemessen nach Strahlungsenergie - mindestens die Hälfte der elektromagnetischen Strahlung die Messzelle x, besonders bevorzugt mindestens drei Viertel. Bevorzugt ist die Mittelachse eines Feldes der emittierten elektromagnetischen Strahlung, beispielsweise die Mittelachse eines Strahlungskegels, auf die Messzelle x gerichtet. Idealerweise erreicht die gesamte elektromagnetische Strahlung die Messzelle x, insbesondere weil die emittierte elektromagnetische Strahlung auf diese Messzelle x gebündelt wird.

In der einfachsten Ausgestaltung sind auf dem Messzellen-Träger eine erste und eine zweite Messzelle montiert. In einem ersten Zustand steht die erste Messzelle in einer Fluidverbindung mit der Umgebung, und die zweite Messzelle ist fluiddicht von der Umgebung getrennt. In einem zweiten Zustand steht die zweite Messzelle in einer Fluidverbindung mit der Umgebung, und die erste Messzelle ist fluiddicht von der Umgebung getrennt. In einer Verallgemeinerung sind N Messzellen auf dem Messzellen-Träger montiert, wobei N > 2 ist. In jedem Zustand steht genau eine Messzelle in einer Fluidverbindung mit der Umgebung, und jede andere Messzelle ist fluiddicht von der Umgebung getrennt. Insgesamt sind also stets N-1 Messzellen fluiddicht von der Umgebung getrennt. Anmerkung: Der Begriff "fluiddicht" schließt die Möglichkeit nicht aus, dass trotzdem eine Fluidverbindung aufgrund unvermeidlicher Spalten und Schlitze auftritt.

In einer alternativen Ausgestaltung sind auf dem Messzellen-Träger mindestens drei Messzellen montiert. In jedem Zustand, in dem der PID betrieben werden kann, ist eine Fluidverbindung zwischen der Umgebung und jeder Messzelle einer ersten Menge von Messzellen hergestellt, während jede Messzelle einer zweiten Menge von Messzellen fluiddicht von der Umgebung getrennt ist. Zu jedem Zeitpunkt besteht die erste Menge aus mindestens zwei Messzellen auf dem Messzellen-Träger, die zweite Menge aus mindestens einer Messzelle auf dem Messzellen-Träger. Je nach aktuellem Zustand des PIDs gehört jede Messzelle auf dem Messzellen-Träger aktuell zur ersten Menge oder zur zweiten Menge. Die Anzahl von Messzellen, die zur ersten Menge gehören, die also in jeweils einer Fluidverbindung mit der Umgebung stehen, ist bei jedem Zustand des PIDs bevorzugt dieselbe. Vom aktuellen Zustand des PIDs hängt es ab, welche Messzellen zur ersten Menge gehören und welche nicht.

Falls auf dem Messzellen-Träger N >= 3 Messzellen montiert sind und die erste Menge aus K >= 2 Messzellen besteht, so hat der PID maximal

$$\binom{N}{K} = N! \ / \ [K! * (N-K)!]$$

verschiedene mögliche Zustände.

In einer bevorzugten Ausgestaltung ist jeder Messzelle jeweils ein Konzentrations-Bereich zugeordnet. Dieser Konzentrations-Bereich umfasst eine untere Schranke und eine obere Schranke. Wenigstens dann, wenn die Konzentration von ionisierbarer Substanz im Gas innerhalb dieses Konzentrations-Bereichs liegt, so umfasst das Signal, welches die Messzelle zu erzeugen vermag, wenigstens die Informationen, ob die Konzentration von ionisierbarer Substanz im zugeordneten Konzentrations-Bereich liegt oder nicht. Bevorzugt umfasst dann, wenn die Konzentration im zugeordneten Konzentrations-Bereich liegt, das Signal zusätzlich eine Information über die gemessene Konzentration. Bevorzugt vermag die Messzelle dann, wenn die Konzentration oberhalb der oberen Schranke liegt, ein Signal zu erzeugen, welches die Informationen umfasst, dass ionisierbare Substanz mit einer Konzentration vorliegt, die gleich oder oberhalb der oberen Schranke ist. Falls die Konzentration unterhalb des zugeordneten Konzentrations-Bereichs liegt oder überhaupt keine ionisierbare Substanz vorliegt, so vermag die Messzelle nicht notwendigerweise ein zuverlässiges Signal zu erzeugen. In der Regel vermag die Messzelle dann, wenn die Konzentration unterhalb der unteren Schranke liegt, nicht zu unterscheiden, ob das zu untersuchende Gas überhaupt ionisierbare Substanz umfasst oder nicht.

Möglich ist, dass allen Messzellen auf dem Messzellen-Träger derselbe Konzentrations-Bereich zugeordnet ist. Auch in dieser Ausgestaltung werden die oben beschriebenen Vorteile der Erfindung erzielt.

In einer bevorzugten Fortbildung der Ausgestaltung mit den Konzentrations-Bereichen unterscheiden sich hingegen mindestens zwei Konzentrations-Bereiche der mehreren Messzellen des PIDs voneinander. Die beiden oder mindestens zwei Konzentrations-Bereiche können sich überlappen oder zueinander disjunkt sein. Bei drei Messzellen ist möglich, dass zwei Messzellen derselbe Konzentrations-Bereich und der dritten Messzelle ein anderer Konzentrations-Bereich zugeordnet sind. Die Ausgestaltung mit verschiedenen Konzentrations-Bereichen führt in vielen Fällen dazu, dass der erfindungsgemäße PID die Konzentration von ionisierbarer Substanz in einem relativ großen Konzentrations-Gesamtbereich zu messen vermag, nämlich dann, wenn die Konzentration in mindestens einen zugeordneten Konzentrations-Bereich fällt. In vielen Fällen ist es technisch nicht möglich oder wenigstens aufwendiger, eine einzelne Messzelle bereitzustellen, welche die Konzentration in einem so großen Gesamt-Konzentrationsbereich wie der PID gemäß der Fortbildung mit unterschiedlichen Konzentrations-Bereichen ausreichend zuverlässig zu messen vermag.

Die Fortbildung mit den mindestens zwei unterschiedlichen Konzentrations-Bereichen ermöglicht es in manchen Fällen, automatisch einen Fehler des PIDs zu detektieren, nämlich eine defekte Messzelle oder optional eine defekte Auswerteeinheit. Bei zwei unterschiedlichen Konzentrations-Bereichen ist meist die untere Schranke eines ersten Konzentrations-Bereichs kleiner als die untere Schranke eines zweiten Konzentrations-Bereichs. Der erste Konzentrations-Bereich ist einer ersten Messzelle auf dem Messzellen-Träger zugeordnet, der zweite Konzentrations-Bereich einer zweiten Messzelle. Die intakte erste Messzelle detektiert das Vorhandensein von ionisierbarer Substanz, wenn die tatsächliche Konzentration oberhalb der ersten (kleineren) unteren Schranke liegt, die intakte zweite Messzelle dann, wenn die tatsächliche Konzentration oberhalb der zweiten (größeren) unteren Schranke liegt. Falls die zweite Messzelle, also die mit dem größeren Konzentrations-Bereich, das Vorhandensein von ionisierbarer Substanz detektiert, die erste Messzelle, also die mit dem kleineren Konzentrations-Bereich, hingegen nicht, so liegt in der Regel ein Fehler vor. Meistens ist dann die erste Messzelle defekt, möglicherweise eine optionale Auswerteeinheit. Möglich ist auch, dass die zweite Messzelle fälschlich ionisierbare Substanz detektiert (Fehlalarm).

Möglich ist auch, dass die obere Schranke des ersten Konzentrations-Bereichs kleiner als die obere Schranke des zweiten Konzentrations-Bereichs ist, die unteren Schranken aber gleich sind. Auch in diesem Fall liegt ein Fehler vor, wenn die zweite Messzelle das Vorhandensein von ionisierbarer Substanz detektiert, die erste Messzelle hingegen nicht.

Erfindungsgemäß steht während eines Einsatzes stets mindestens eine Messzelle auf dem Messzellen-Träger in einer Fluidverbindung mit der Umgebung, und das zu untersuchende Gas aus der Umgebung kann daher mindestens eine Messzelle erreichen, beispielsweise durch Diffusion oder indem das Gas angesaugt wird. Die gilt bis auf einen optionalen Zwischen-Zeitraum, in dem der PID von einem Zustand in einen anderen Zustand überführt wird, und bis auf einen optionale Ruhezustand, in dem der PID ausgeschaltet und bevorzugt vollständig von der Umgebung getrennt ist.

In einer bevorzugten Ausgestaltung steht während eines Einsatzes des PIDs stets genau eine (eine und nur eine) Messzelle in einer Fluidverbindung mit der Umgebung, während die oder jede andere Messzelle von der Umgebung getrennt ist und daher das Gas aus der Umgebung nicht diese andere Messzelle erreichen kann. Oder K >= 2 Messzellen stehen in jeweils einer Fluidverbindung mit der Umgebung, und N - K Messzellen sind von der Umgebung fluiddicht getrennt, wobei N > K gilt. Diese Wirkungen werden bevorzugt wie folgt erzielt: Der PID umfasst ein Gehäuse mit mindestens einer Öffnung im Gehäuse. Zu untersuchendes Gas in der Umgebung kann nur durch die oder mindestens eine Öffnung im Gehäuse hindurch eine Messzelle des PIDs erreichen. Anmerkung: Möglich ist, dass in einer relativ kurzen Zeitspanne während des Einsatzes keine Messzelle in einer Fluidverbindung steht, nämlich bei einem Wechsel von einer aktiven Messzelle zu einer anderen aktiven Messzelle. Wenn der PID nicht benutzt wird, also in einem Ruhezustand ist, so sind bevorzugt alle Messzellen von der Umgebung getrennt.

Mit anderen Worten: Falls der PID in demjenigen Zustand betrieben wird, welcher der Messzelle x zugeordnet ist, so ist eine Fluidverbindung zwischen der Umgebung und der Messzelle x hergestellt, wobei diese Fluidverbindung durch die oder eine Öffnung im Gehäuse hindurch führt. Das Gehäuse trennt mindestens eine andere, bevorzugt jede andere Messzelle y ($y \neq x$) von der Umgebung ab, sodass das Gas aus der Umgebung keine andere Messzelle y erreichen kann. Bevorzugt lässt sich diese Öffnung mit einem Verschluss verschließen, wobei dieser Verschluss die Öffnung dann verschließt, wenn der PID in einem Ruhezustand ist.

Möglich ist, dass das Gehäuse eine einzige Öffnung umfasst, wobei Gas aus der Umgebung durch diese Öffnung hindurch in das Innere des Gehäuses gelangen kann. Jede Fluidverbindung zwischen der Umgebung und einer Messzelle auf dem Messzellen-Träger führt durch dieselbe Öffnung.

Möglich ist, dass zwischen mindestens einer Öffnung im Gehäuse und dem Messzellen-Träger eine bewegliche Blende angeordnet ist, wobei diese Blende eine Fluidverbindung je nach ihrer Stellung freigeben oder unterbrechen kann. In diese Blende ist bevorzugt mindestens eine Blenden-Öffnung eingelassen. Eine Fluidverbindung zwischen der Umgebung und einer Messzelle führt durch die gerade erwähnte Öffnung im Gehäuse und durch diese Blenden-Öffnung in der Blende hindurch. Möglich ist auch, dass das Gehäuse mehrere Öffnungen umfasst, beispielsweise jeweils eine Öffnung pro Messzelle auf dem Messzellen-Träger, und die Blende zwischen diesen Öffnungen und dem Messzellen-Träger angeordnet ist angeordnet ist und eine Fluidverbindung zwischen einer Öffnung im Gehäuse und einer Messzelle wahlweise freigibt oder versperrt.

Weiter oben wurde eine Ausgestaltung beschrieben, bei der auf dem Messzellen-Träger N >= 3 Messzellen montiert sind und zu jedem Zeitpunkt jeweils K >= 1 dieser Messzellen in jeweils einer Fluidverbindung mit der Umgebung stehen und die übrigen N - K Messzellen fluiddicht von der Umgebung getrennt sind. Welche K Messzellen auf dem Messzellen-Träger aktuell in jeweils einer Fluidverbindung mit der Umgebung stehen, hängt vom aktuellen Zustand des PIDs ab.

In einer Realisierungsform umfasst das Gehäuse K Öffnungen. Bei dieser Realisierungsform ist bevorzugt der Messzellen-Träger relativ zum Gehäuse beweglich, besonders bevorzugt drehbar. Die K Öffnungen im Gehäuse stellen K Fluidverbindungen zwischen K Messzellen und der Umgebung her. Das Gehäuse trennt die übrigen N - K Messzellen fluiddicht von der Umgebung. In einer anderen Realisierungsform umfasst das Gehäuse bis zu N Öffnungen, nämlich jeweils eine Öffnung pro Messzelle, oder auch eine durchgehende Öffnung. Die oben erwähnte Blende ist relativ zum Gehäuse beweglich und weist K Blenden-Öffnungen auf. Die K Blenden-Öffnungen in der Blende stellen K Fluidverbindungen zwischen K Messzellen und der Umgebung her. Die Blende trennt die übrigen N - K Messzellen fluiddicht von der Umgebung, optional im Zusammenwirken mit dem Gehäuse und / oder dem Messzellen-Träger.

Die Ausgestaltung, dass während eines Einsatzes nur genau eine Messzelle oder wenigstens nicht jede Messzelle in einer Fluidverbindung mit der Umgebung steht, erhöht weiter die Lebensdauer des erfindungsgemäßen PIDs verglichen mit einem PID, der nur eine Messzelle umfasst oder bei dem während eines Einsatzes jede Messzelle dauerhaft in einer Fluidverbindung mit der Umgebung steht. Zu jedem Zeitpunkt während eines Einsatzes können nämlich dank der erfindungsgemäßen Ausgestaltung Schadgase und Partikel in der Umgebung nur genau eine Messzelle erreichen. Ablagerungen können sich in der Regel nur auf derjenigen Messzelle bilden, die aktuell in einer Fluidverbindung mit der Umgebung steht.

Die Ausgestaltung, dass zu jedem Zeitpunkt während eines Einsatzes nur genau eine Messzelle oder wenigstens nur K der N Messzellen in einer Fluidverbindung mit der Umgebung steht, lässt sich sowohl dann anwenden, wenn jeder Messzelle der gleiche Konzentrations-Bereich zugeordnet ist, als auch dann, wenn den Messzellen insgesamt mindestens zwei unterschiedliche Konzentrations-Bereiche zugeordnet sind.

Das erfindungsgemäße Merkmal, dass zu jedem Zeitpunkt während eines Einsatzes mindestens eine, bevorzugt genau eine Messzelle in einer Fluidverbindung mit der Umgebung steht und mindestens eine andere, bevorzugt jede andere Messzelle fluiddicht von der Umgebung getrennt ist, führt in vielen Fällen zu einer relativ hohen Lebensdauer bei einem nachfolgend beschriebenen zeitgesteuerten automatisierten Betrieb des PIDs.

Eine Abfolge von Veränderungs-Zeitpunkten ist vorgegeben, beispielsweise eine äquidistante Abfolge. Zwischen zwei unmittelbar aufeinanderfolgenden Veränderungs-Zeitpunkten dieser Abfolge wird der PID in demselben Zustand betrieben, wobei dieser Zustand einer Messzelle zugeordnet ist. Zwischen den beiden Veränderungs-Zeitpunkten verändert der PID also nicht seinen Zustand. Im Zeitraum zwischen diesen beiden Veränderungs-Zeitpunkten steht daher durchgehend dieselbe Messzelle oder stehen dieselben K Messzellen in jeweils einer Fluidverbindung mit der Umgebung, sodass ein zu untersuchendes Gas diese Messzelle(n) erreichen kann. Wenigstens ein Teil der emittierten elektromagnetischen Strahlung erreicht dieselbe(n) Messzelle(n). Die oder mindestens eine, bevorzugt jede weitere Messzelle oder die weiteren N - K Messzellen ist / sind von der Umgebung fluiddicht getrennt.

An jedem Veränderungs-Zeitpunkt der Abfolge wird der Zustand des PIDs verändert. Durch diese Veränderung wird bewirkt, dass nicht mehr diese, sondern mindestens eine andere Messzelle in einer Fluidverbindung mit der Umgebung steht. Die elektromagnetische Strahlung erreicht diese andere Messzelle. Um den Zustand des PIDs zu verändern, werden der Messzellen-Träger und / oder eine Öffnung im Gehäuse und / oder eine Blende des PIDs relativ zum Gehäuse entsprechend bewegt. Diese Ausgestaltung führt in vielen Fällen zu einer relativ gleichmäßigen Belastung der Messzellen über der Zeit und erhöht weiter die Lebensdauer des erfindungsgemäßen PIDs. Möglich, aber dank der Ausgestaltung nicht erforderlich ist, dass ein Benutzer den Schritt auslösen oder bewirken muss, dass der Zustand des PIDs verändert und eine andere Messzelle in einer Fluidverbindung mit der Umgebung steht.

Erfindungsgemäß sind die Messzellen auf dem Messzellen-Träger montiert. In einer Ausgestaltung lässt sich der Messzellen-Träger mitsamt den Messzellen relativ zur Strahlungsquelle und auch relativ zu einem optionalen Gehäuse des PIDs um eine Drehachse drehen. Jeder Messzelle ist jeweils eine Rotationsposition des Messzellen-Trägers relativ zum Gehäuse und damit relativ zur Drehachse zugeordnet. Bei dieser Ausgestaltung legt jede Rotationsposition jeweils einen Zustand des PIDs fest. Wenn der Messzellen-Träger in derjenigen Rotationsposition ist, die der Messzelle x zugeordnet ist, so ist eine Fluidverbindung zwischen dieser Messzelle x und der Umgebung des PIDs hergestellt. Wenigstens ein Teil der emittierten elektromagnetischen Strahlung erreicht dann die Messzelle x. Das Entsprechende gilt für eine Ausgestaltung, bei der K >= 2 der insgesamt N >= 3 Messzellen gleichzeitig in jeweils einer Fluidverbindung mit der Umgebung stehen und die übrigen N - K Messzellen fluiddicht von der Umgebung getrennt sind.

In einer Realisierungsform umfasst der PID ein Gehäuse mit einer einzigen Öffnung. Falls der Messzellen-Träger in derjenigen Rotationsposition ist, die einer Messzelle x zugeordnet ist, so überlappt diese Messzelle x oder ein Kanal zu dieser Messzelle x mit der Öffnung, sodass eine Fluidverbindung zwischen dieser Messzelle und der Umgebung hergestellt ist. Bevorzugt verhindern das Gehäuse und optional der Messzellen-Träger, dass gleichzeitig mindestens eine weitere Messzelle y (y ≠ x) in einer Fluidverbindung mit der Umgebung steht.

Die Ausgestaltung mit dem beweglichen, insbesondere drehbaren Messzellen-Träger ermöglicht es, dass die übrigen Bestandteile des PIDs, insbesondere die Strahlungsquelle sowie ein optionaler Antrieb für den Messzellen-Träger, relativ zu einem Gehäuse des PIDs fest angeordnet sind. Insbesondere sind weder eine bewegliche Öffnung noch ein Verschluss für eine Öffnung erforderlich. Dank des beweglichen Messzellen-Trägers lässt sich jede Messzelle relativ zur Strahlungsquelle in eine Position bewegen, in der die Messzelle in der Strahlungsrichtung der emittierten elektromagnetischen Strahlung liegt. Ausreichend ist, dass die Strahlungsquelle die elektromagnetische Strahlung in einem relativ engen Bündel, beispielsweise mit einem relativ schmalen Kegel, emittiert. Daher reicht für viele Anwendungen eine relativ kleine Strahlungsquelle aus. Eine kleine Strahlungsquelle erfordert weniger Platz, hat oft eine höhere Lebensdauer als eine größere Strahlungsquelle und verbraucht oft weniger elektrische Energie.

In einer Realisierungsform kann ein Benutzer durch einen Eingriff von außen den Messzellen-Träger um die Drehachse drehen, beispielsweise mithilfe eines Betätigungselements oder weil der Messzellen-Träger über das Gehäuse übersteht. Diese Ausgestaltung erspart einen Antrieb sowie eine Energieversorgung für diesen Antrieb.

In einer anderen Realisierungsform ist der Messzellen-Träger relativ zum Gehäuse drehbar und ist drehfest mit einer Welle verbunden. Ein ansteuerbarer Stellantrieb vermag die Welle und damit den Messzellen-Träger um die Drehachse zu drehen. Bevorzugt ist die Längsachse der Welle gleich der Drehachse, um welche der Messzellen-Träger drehbar ist, optional parallel zu dieser Drehachse. Der Stellantrieb für den Messzellen-Träger kann vollständig im Inneren des Gehäuses angebracht sein.

Möglich ist, dass ein Benutzer einen Konzentrations-Bereich vorgibt, der einer Messzelle auf dem Messzellen-Träger zugeordnet ist oder im Konzentrations-Bereich, der einer Messzelle zugeordnet ist, enthalten ist. Ein signalverarbeitendes Steuergerät (control unit) des PIDs verarbeitet diese Benutzereingabe und stellt automatisch fest, welcher Messzelle der ausgewählte oder enthaltende Konzentrations-Bereich zugeordnet ist. Das Steuergerät steuert den Stellantrieb an, und der angesteuerte Stellantrieb dreht den Messzellen-Träger in diejenige Rotationsposition, die dieser Messzelle zugeordnet ist. Möglich ist auch, dass der Benutzer ein Betätigungselement betätigt, und als Reaktion auf die Betätigung dreht der Stellantrieb den Messzellen-Träger in die jeweils nächste Rotationsposition. Möglich ist auch, dass außen auf dem Gehäuse Kennzeichnungen für die Konzentrations-Bereiche angeordnet sind. Der Benutzer kann diese Kennzeichnungen verwenden, um den Messzellen-Träger von Hand in eine gewünschte Rotationsposition zu drehen.

In einer anderen Ausgestaltung führt der Stellantrieb automatisch mindestens einmal die nachfolgend beschriebene Abfolge durch, beispielsweise nach einer entsprechenden Ansteuerung durch das Steuergerät. Bei der Durchführung dieser Abfolge dreht der Stellantrieb den Messzellen-Träger nacheinander in jede Rotationsposition, die einer Messzelle zugeordnet ist. Dadurch steht nacheinander jede Messzelle auf dem Messzellen-Träger in einer Fluidverbindung mit der Umgebung und kann von Gas aus der Umgebung erreicht werden und ein Signal generieren. Bevorzugt sind alle anderen Messzellen von der Umgebung getrennt. Wenigstens ein Teil der elektromagnetischen Strahlung erreicht jeweils diejenige Messzelle, die in einer Fluidverbindung mit der Umgebung steht. Während die Abfolge durchgeführt wird, wird der PID also nacheinander in jedem Zustand betrieben, der einer Messzelle auf dem Messzellen-Träger zugeordnet ist. Durch diese Ausgestaltung wird insgesamt ein deutlich größerer Konzentrations-Gesamtbereich abgedeckt, als wenn nur eine einzige Messzelle verwendet werden würde. Die Durchführung der Abfolge stellt sicher, dass tatsächlich nacheinander jede Messzelle verwendet wird und ein Signal generiert. Die Belastung über der Zeit während des Einsatzes lässt sich relativ gleichmäßig auf die Messzellen verteilen.

In einer Ausgestaltung wird diese Abfolge als Reaktion auf eine entsprechende Benutzereingabe durchgeführt. Möglich ist auch, dass bei einem Einsatz des PIDs diese Abfolge laufend wiederholt durchgeführt wird, ohne dass hierfür eine Benutzereingabe erforderlich ist. Dadurch lässt sich erreichen, dass alle Messzellen über der Zeit etwa gleichmäßig belastet werden. Möglich ist insbesondere, dass eine Abfolge von Auslöse-Zeitpunkten vorgegeben ist und die Abfolge bei jedem Auslöse-Zeitpunkt erneut automatisch ausgelöst wird.

In einer Ausgestaltung vermag der erfindungsgemäße PID automatisch das Ereignis zu detektieren, dass eine Messzelle defekt ist, beispielsweise weil ein Kurzschluss festgestellt ist oder die Messzelle das Vorhandensein von ionisierbarer Substanz nicht detektiert, obwohl eine andere Messzelle mit einem geringeren zugeordneten Konzentrations-Bereich ionisierbare Substanz detektiert hat. Bevorzugt wird dann, wenn eine defekte Messzelle detektiert worden ist, diese Messzelle von der gerade beschriebenen Abfolge ausgenommen.

Weiter oben wurde eine Ausgestaltung beschrieben, bei der der Messzellen-Träger um eine Drehachse drehbar ist. Eine alternative Ausgestaltung ermöglicht es, einen relativ zum Gehäuse stationären Messzellen-Träger vorzusehen, insbesondere einen Messzellen-Träger, der fest mit dem Gehäuse verbunden ist. Möglich ist auch, die nachfolgend beschriebene alternative Ausgestaltung mit einem drehbar gelagerten Messzellen-Träger zu kombinieren.

Bei dieser alternativen Ausgestaltung umfasst der PID eine Blende mit einer Blenden-Öffnung. Diese Blende ist relativ zum Messzellen-Träger um eine Drehachse drehbar. Bevorzugt ist die Blinde auch relativ zum Gehäuse und / oder relativ zur Strahlungsquelle um die Drehachse drehbar. Jeder Messzelle ist jeweils eine Rotationsposition der Blende relativ zur Drehachse der Blende und damit der Öffnung zugeordnet. Jede Rotationsposition der Blende legt jeweils einen Zustand des PIDs fest. Falls die Blende in derjenigen Rotationsposition ist, die der Messzelle x zugeordnet ist, so stellt die Blenden-Öffnung in der Blende eine Fluidverbindung zwischen dieser Messzelle x und der Umgebung her. Bevorzugt verhindert die Blende, dass eine weitere Messzelle y ($y \neq x$) in eine Fluidverbindung mit der Umgebung kommt oder steht. Möglich ist auch, dass mindestens zwei Öffnungen in die Blende eingelassen sind und daher mindestens zwei Messzellen in gleichzeitig in jeweils einer Fluidverbindung mit der Umgebung stehen. Bevorzugt ist der Messzellen-Träger fest mit dem Gehäuse verbunden.

In einer Ausgestaltung lässt sich der PID wahlweise in einem Überwachungsmodus oder in einem Messmodus betreiben. Im Überwachungsmodus steht genau eine Messzelle in einer Fluidverbindung mit der Umgebung, während die oder jede weitere Messzelle fluiddicht von der Umgebung getrennt ist. Im Messmodus stehen mindestens zwei Messzellen gleichzeitig in jeweils einer Fluidverbindung mit der Umgebung. Möglich ist, dass im Messmodus jede Messzelle in jeweils einer Fluidverbindung mit der Umgebung steht. Möglich ist auch, dass auch im Messmodus wenigstens eine Messzelle fluiddicht von der Umgebung getrennt ist. Auch für die Ausgestaltung mit dem Überwachungsmodus und dem Messmodus lassen sich die oben beschriebenen Realisierungsformen anwenden, um wahlweise eine Fluidverbindung zwischen einer Messzelle und der Umgebung herzustellen oder um die Messzelle fluiddicht von der Umgebung zu trennen.

Zu Beginn eines Einsatzes wird der PID bevorzugt im Überwachungsmodus betrieben. Der PID ist wie folgt ausgestaltet: Das Ereignis, dass der im Überwachungsmodus betriebene PID eine ionisierbare Substanz detektiert hat, löst den Schritt aus, dass der PID sich automatisch in den Messmodus umschaltet. Bevorzugt schaltet der im Messmodus betriebene PID sich wieder in den Überwachungsmodus um, wenn der PID keine ionisierbare Substanz mehr detektiert hat.

Die Ausgestaltung mit dem Überwachungsmodus und dem Messmodus kombiniert den Vorteil einer längeren Lebensdauer mit dem Vorteil einer höheren Zuverlässigkeit. Solange der PID im Überwachungsmodus betrieben wird, steht nur eine Messzelle in einer Fluidverbindung mit der Umgebung, und nur eine Messzelle wird stärker belastet. Bevorzugt wird der PID im Überwachungsmodus und nacheinander in unterschiedlichen Zuständen betrieben, so wie oben beschrieben. Weil der PID im Messmodus mit mindestens zwei Messzellen misst, wird im Messmodus eine höhere Zuverlässigkeit erzielt. Ermöglicht wird im Messmodus, die mindestens zwei Signale von diesen beiden Messzellen miteinander zu kombinieren.

Der erfindungsgemäße PID kann als ein tragbares Gerät mit einer eigenen Spannungsversorgungseinheit ausgestaltet sein, beispielsweise mit mehreren wiederaufladbaren Akkumulatoren. Bevorzugt kann ein Benutzer den PID in einer Hand oder am Körper tragen und ihn in einem Bereich mitführen, der auf die ionisierbare Substanz zu überwachen ist. Der PID kann auch ein stationäres Gerät sein, das mit einem stationären Spannungsversorgungsnetz verbunden oder verbindbar ist.

Bevorzugt lässt sich der PID zusätzlich zu den oben beschriebenen Zuständen, die jeweils einer Messzelle zugeordnet sind, in einen Ruhezustand verbringen, wobei bevorzugt im Ruhestand das gesamte Innere des PIDs von der Umgebung getrennt ist.

Im Folgenden wird die Erfindung anhand eines Ausführungsbeispiels beschrieben. Hierbei zeigt

Figur 1    den prinzipiellen Aufbau eines Photo-Ionisations-Detektors (PIDs);

Figur 2    in einer perspektivischen Darstellung einen erfindungsgemäßen PID, wobei der Deckel fortgelassen ist;

Figur 3    in einer perspektivischen Darstellung den Messzellen-Träger des Ausführungsbeispiels;

Figur 4    aus der Betrachtungsrichtung von Figur 2 die erste Ausgestaltung, bei der der Messzellen-Träger drehbar ist und der Deckel eine einzige Öffnung aufweist;

Figur 5    aus der Betrachtungsrichtung von Figur 2 die zweite Ausgestaltung, bei der der Messzellen-Träger stationär ist und der Deckel eine Öffnung pro Messzelle aufweist;

Figur 6    aus der Betrachtungsrichtung von Figur 2 die dritte Ausgestaltung, bei der der Messzellen-Träger stationär ist und eine drehbare Blende vorhanden ist;

Figur 7    aus der Betrachtungsrichtung von Figur 2 die vierte Ausgestaltung, bei der der Messzellen-Träger stationär und die Strahlungsquelle drehbar ist und eine drehbare Blende vorhanden ist.

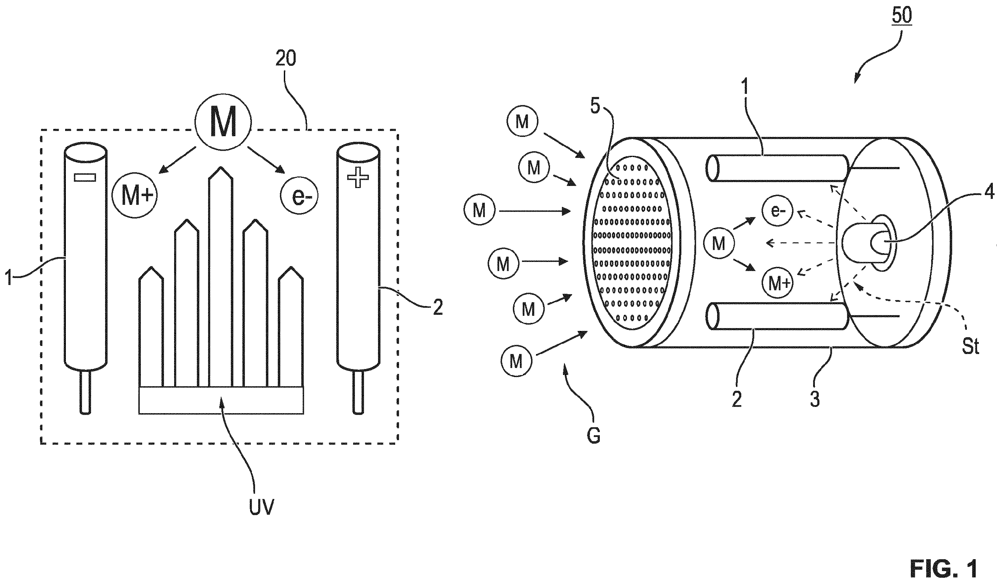

Figur 1 zeigt den prinzipiellen Aufbau eines Photo-Ionisations-Detektors 50, der im Folgenden mit PID abgekürzt wird. Ein PID vermag mindestens festzustellen, ob in einem zu überwachenden räumlichen Bereich mindestens eine ionisierbare Substanz vorhanden ist oder nicht. Der zu überwachende Bereich ist beispielsweise das Innere eines Gebäudes oder Fahrzeugs oder Flugzeugs oder auch ein Bereich unter freiem Himmel, beispielsweise eine Raffinerie oder eine sonstige Produktionsanlage.

Viele zu detektierende leichtflüchtige organische Substanzen sind ionisierbar und lassen sich daher mithilfe eines PIDs detektieren. Optional vermag ein PID nicht nur das Vorhandensein, sondern zusätzlich die Konzentration von ionisierbarer Substanz in einem Gas, das im Bereich vorhanden ist, zu detektieren.

Möglich ist, dass im Bereich mehrere ionisierbare Substanzen vorhanden sind. In diesem Fall vermag der PID häufig die Summe der Konzentrationen der ionisierbaren Substanzen zu detektieren. Im Folgenden wird abkürzend von "dem Vorhandensein" und "der Konzentration" von ionisierbarer Substanz gesprochen, und hiermit können auch mehrere gleichzeitig vorhandene ionisierbare Substanzen gemeint sein. "Die Konzentration" ist die summierte Konzentration aller zu detektierenden ionisierbaren Substanzen.

Eine ionisierbare Substanz kann als Bestandteil eines Gases G im zu überwachenden Bereich auftreten. Eine Menge des Gases G kann aus dem Bereich durch eine poröse Membrane 5 hindurch in das Inneren eines Gehäuses 3 des PIDs 50 fließen, beispielsweise hinein diffundieren und / oder von einer nicht gezeigten Pumpe des PIDs 50 angesaugt werden.

Im Inneren des Gehäuses 3 befinden sich eine Messelektrode 1, eine Gegenelektrode 2 und eine Strahlungsquelle 4, optional eine nicht gezeigte Referenzelektrode. Die Messelektrode 1 ist elektrisch von der Gegenelektrode 2 isoliert. Bevorzugt liegt der Abstand zwischen den beiden Elektroden 1 und 2 unterhalb von 1 mm.

Die Strahlungsquelle 4 emittiert ionisierende elektromagnetische Strahlung UV in eine Strahlungsrichtung St in das Innere des Gehäuses 3. Bevorzugt emittiert die Strahlungsquelle 4 ultraviolettes Licht (Wellenlänge zwischen 100 nm und 380 nm), besonders bevorzugt hartes UV-Licht (Wellenlänge zwischen 100 nm und 280 nm).

In einer Realisierungsform wird an die Strahlungsquelle 4 eine elektrische Spannung angelegt, in einer Realisierungsform eine Wechselspannung. Die angelegte Spannung regt ein Plasma im Inneren der Strahlungsquelle 4 an. Das angeregte Plasma emittiert ultraviolettes Licht. Möglich ist auch, dass eine Anordnung mit mehreren LEDs oder mit mindestens einer Laserdiode als die Strahlungsquelle 4 fungiert.

Ein PID vermag zwar das Vorhandensein und optional die Konzentration von ionisierbarer Substanz zu detektieren, aber im Allgemeinen nicht unterschiedliche ionisierbare Substanzen voneinander zu unterscheiden. Die elektromagnetische Strahlung, welche die Strahlungsquelle 4 emittiert, muss daher einerseits eine ausreichende Intensität besitzen, um jede Substanz, die im Gas G auftreten kann und zu detektieren ist, in ausreichendem, d.h. messbarem Umfang zu ionisieren. Andererseits sollte vermieden werden, dass eine sonstige Substanz im Gas, die ebenfalls ionisierbar ist und nicht detektiert werden soll, beispielsweise Sauerstoff, ionisiert wird. Eine Ionisierung von Sauerstoff täuscht in der Regel das Vorhandensein einer zu detektierenden ionisierbaren Substanz vor.

Diese beiden Anforderungen geben einen Bereich für die Intensität der emittierten elektromagnetischen Strahlung vor. Bevorzugt liegt die Intensität zwischen 9 eV und 11 eV (eV = Elektronenvolt), besonders bevorzugt beträgt sie 10,6 eV. Elektromagnetische Strahlung mit dieser Intensität ionisiert in vielen Anwendungen die zu detektierenden leichtflüchtigen Substanzen, aber keinen Sauerstoff.

Die emittierte elektromagnetische Strahlung durchdringt eine Messstrecke im Inneren des Gehäuses 3 und ionisiert die oder jede Substanz, welches als Bestandteil des Gases G in das Innere des Gehäuses 3 geflossen ist und von der Ionisierungsenergie der elektromagnetischen Strahlung ionisiert werden kann. Die oder wenigstens ein Teil der Moleküle M der oder jeder ionisierbaren Substanz im Gehäuse 3 werden aufgespalten. Positiv geladene Teilchen werden von der Gegenelektrode 2 angezogen, negativ geladene Teile von der Messelektrode 1 aufgenommen.

Ein nicht gezeigter Sensor misst ein Maß für die elektrische Spannung zwischen den beiden Elektroden 1 und 2 oder für die elektrische Spannung, die zwischen zwei Messstellen der Messelektrode 1 auftritt, oder für die Stärke oder die Menge (elektrische Ladung) des Stroms, der durch die Messelektrode 1 fließt. Diese Spannung oder Stromstärke oder Ladung oder Menge fungiert als die messbare elektrische Eigenschaft der Messelektrode 1 und korreliert mit dem Vorhandensein und optional der Menge oder der Konzentration von ionisierbarer Substanz im Gas G. Durch die Konstruktion des PIDs 50 ist das Volumen des Inneren des Gehäuses 3, also das Volumen der Messkammer und damit das Volumen der untersuchten Gasprobe, bekannt. Aus diesem bekannten Messkammer-Volumen sowie der gemessenen Menge oder Konzentration von ionisierbarer Substanz in der Messkammer lässt sich die Konzentration von ionisierbarer Substanz im Gas G herleiten.

Im Folgenden wird der Begriff "Messzelle" für ein Bauteil verwendet, welches eine Messelektrode 1 sowie optional eine Gegenelektrode 2 und optional eine Referenzelektrode umfasst, wobei zwischen den beiden Elektroden 1 und 2 und / oder um die beiden Elektroden 1 und 2 herum eine Messkammer angeordnet ist. In vielen Fällen ist eine solche Messzelle ein passives elektrisches Bauteil, verbraucht also keine elektrische Energie. Ein PID 50 nach dem Stand der Technik umfasst eine Messzelle 20 mit zwei Elektroden 1 und 2 und optional mit einer Referenzelektrode, eine Strahlungsquelle 4 und ein Gehäuse 3, welches in einer Fluidverbindung mit der Umgebung steht. Eine solche Messzelle 20 wird in Figur 1 als Bestandteil des PIDs 50 gezeigt.

Eine Messzelle 20 eines PIDs vermag das Vorhandensein und optional die Konzentration von ionisierbarer Substanz in einem Gas G, welche sich in der Messkammer befindet, zu detektieren, vorausgesetzt die Konzentration von ionisierbarer Substanz liegt in einem für die Messzelle 20 vorgegebenen Konzentrations-Bereich. Dieser Konzentrations-Bereich umfasst beispielsweise den Bereich zwischen 0,1 ppm bis 2 ppm oder von 2 ppm bis 2000 ppm (ppm = parts per million). Eine Messzelle 20 eines PIDs ist auf einen Konzentrations-Bereich zugeschnitten. Falls die Konzentration oberhalb der oberen Schranke des vorgegebenen Konzentrations-Bereichs liegt, so vermag die Messzelle 20 in der Regel ein Signal zu liefern, welches das Vorhandensein von ionisierbarer Substanz größer oder gleich der oberen Schranke anzeigt. Falls die Konzentration hingegen unterhalb der unteren Schranke liegt, so vermag die Messzelle 20 häufig das Vorhandensein von ionisierbarer Substanz nicht zu detektieren. Falls die Konzentration von ionisierbarer Substanz im Konzentrations-Bereich liegt, so liefert die Messzelle 20 in der Regel ein Signal, welches mit der Konzentration korreliert. In der Regel ist das Signal umso stärker, je größer die Konzentration von ionisierbarer Substanz im Gas G ist.

Soweit nichts anderes beschrieben ist, weist der Erfindungsgemäße PID gemäß dem Ausführungsbeispiel auch die gerade beschriebenen Merkmale auf.

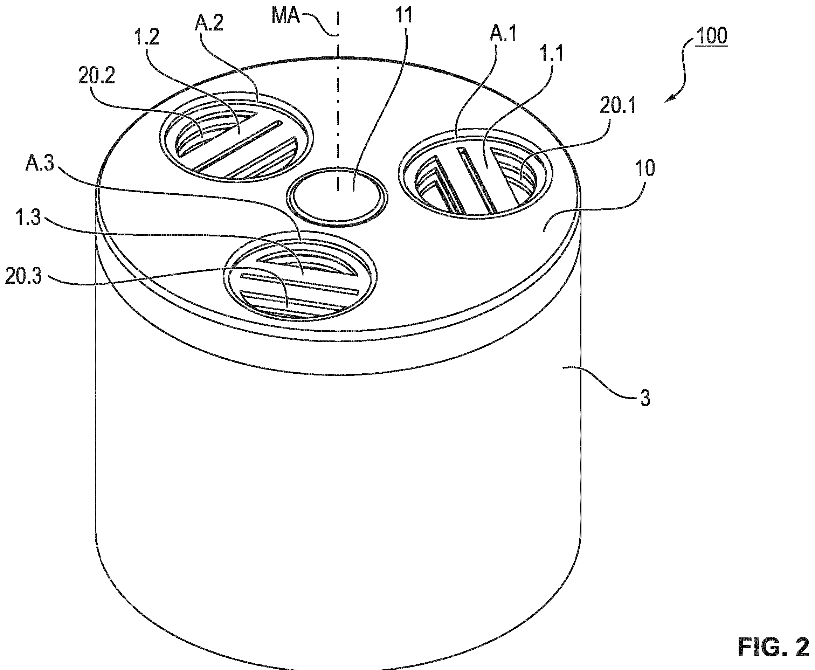

Figur 2 bis Figur 7 zeigen verschiedene Ausgestaltungen eines erfindungsgemäßen PIDs 100. Dieser PID 100 vermag das Vorhandensein und optional die Konzentration von ionisierbarer Substanz in einem Gas G zu detektieren und damit einen räumlichen Bereich zu überwachen, in dem das Gas G auftreten kann. Gleiche Bezugszeichen haben die gleichen Bedeutungen wie in Figur 1. Der erfindungsgemäße PID 100 umfasst also genau wie der PID 50 nach dem Stand der Technik ein Gehäuse 3 und eine Strahlungsquelle 4. Die Strahlungsquelle 4 emittiert elektromagnetische Strahlung in eine Strahlungsrichtung St, vgl. Figur 4 bis Figur 7. Die Strahlungsrichtung St ist bevorzugt die Mittelachse der kegelförmig emittierten elektromagnetischen Strahlung.

Bevorzugt umfasst der PID 100 eine eigene Spannungsversorgungseinheit, beispielsweise mindestens einen Akkumulator, und ist daher nicht abhängig von einem stationären Spannungsversorgungsnetz. Diese Ausgestaltung ermöglicht es, den PID 100 als tragbares Gerät auszuschalten. Die Erfindung lässt sich auch für einen PID 100 verwenden, der mit einem stationären Spannungsversorgungsnetz verbunden oder verbindbar ist, insbesondere für einen stationären PID.

In einer Ausgestaltung umfasst der PID 100 eine Ausgabeeinheit (nicht gezeigt). Der PID 100 vermag auf dieser Ausgabeeinheit das Vorhandensein und optional die gemessene Konzentration von ionisierbarer Substanz in einer von einem Menschen wahrnehmbaren Form auszugeben. Alternativ vermag der PID 100 zu bewirken, dass diese Informationen auf einer räumlich entfernten Anzeigeeinheit ausgegeben werden.

In einer Ausgestaltung umfasst der PID 100 eine Alarmeinheit. Auf dieser Alarmeinheit gibt der PID 100 einen Alarm in einer von einem Menschen wahrnehmbaren Form aus, falls die Konzentration von ionisierbarer Substanz oberhalb einer vorgegebenen Konzentrations-Schranke liegt. Beispielsweise vibriert der PID 100, um einen Alarm auszugeben. Möglich ist auch, dass der PID 100 eine Nachricht erzeugt, wobei diese Nachricht eine Information über das Vorhandensein und optional über die gemessene Konzentration umfasst. Diese Nachricht wird an einen räumlich entfernten Empfänger übermittelt. Der Empfänger gibt die Nachricht in einer von einem Menschen wahrnehmbaren Form aus.

Der erfindungsgemäße PID 100 umfasst im Ausführungsbeispiel drei Messzellen 20.1, 20.2, 20.3. Möglich ist auch, dass ein erfindungsgemäßer PID 100 nur zwei Messzellen oder mindestens vier Messzellen umfasst.

Jede Messzelle 20.1, 20.2, 20.3 umfasst jeweils eine Messelektrode 1.1, 1.2, 1.3 sowie eine Gegenelektrode 2.1, 2.2, 2.3. Jede Messzelle 20.1, 20.2, 20.3 kann genauso aufgebaut sein wie die Messzelle 20, die mit Bezug auf Figur 1 beschrieben wurde. Jede Messzelle 20.1, 20.2, 20.3 ist auf jeweils einen Konzentrations-Bereich für die Konzentration von ionisierbarer Substanz im Gas G zugeschnitten. Die drei Konzentrations-Bereiche der drei Messzellen 20.1, 20.2, 20.3 können gleich sein oder sich voneinander unterscheiden. Möglich ist, dass die drei Konzentrations-Bereiche sich überlappen oder auch zueinander paarweise disjunkt sind. Möglich ist auch, dass zwei Konzentrations-Bereiche gleich sind und der dritte abweicht.

Die drei Messzellen 20.1, 20.2, 20.3 sind in jeweils einer Aufnahme A.1, A.2, A.3 eines Messzellen-Trägers 10 aufgenommen und dort befestigt und können sich nicht relativ zum Messzellen-Träger 10 bewegen. Jeweils mindestens ein elektrischer Kontakt pro Messzelle 20.1, 20.2, 20.3 an der Aufnahme A.1, A.2, A.3 leitet ein elektrisches Signal von dieser Messzelle 20.1, 20.2, 20.3 weiter. Der Messzellen-Träger 10 ist im Ausführungsbeispiel rotationssymmetrisch zu einer Mittelachse MA. Bevorzugt hat der Messzellen-Träger 10 die Form einer Scheibe. Zwischen dem Messzellen-Träger 10 und dem Bereich, der auf das Vorhandensein von ionisierbarer Substanz zu überwachen ist, befindet sich ein Deckel 13, der fluiddicht mit dem Gehäuse 3 verbunden ist, vgl. Figur 4 und Figur 5.

Eine Platte 17 ist auf die Rückseite des Messzellen-Trägers 10 montiert und zeigt vom Deckel 13 weg. Die Platte 17 ist für elektromagnetische Strahlung von der Strahlungsquelle 4 durchlässig, trennt aber die Messzellen 20.1, 20.2, 20.3 fluiddicht voneinander und vom Raum im Gehäuse 3 und um die Strahlungsquelle 4 herum. Dadurch kann kein Gas aus der Umgebung eine Messzelle 20.1, 20.2, 20.3 von hinten erreichen, also durch den Raum zwischen der Strahlungsquelle 4 und der Platte 17 hindurch. In einer Ausgestaltung sind die Aufnahmen A.1, A.2, A.3 in die Platte 17 integriert. Möglich ist auch, dass die Aufnahmen A.1, A.2, A.3 in eine weitere Platte integriert sind, vorbei die Platte 17 sich zwischen der weiteren Platte und der Strahlungsquelle 4 befindet.

In einer bevorzugten Ausgestaltung ist der Deckel 13 lösbar mit dem Gehäuse 3 verbunden und lässt sich zwecks einer Wartung abnehmen. Bei abgenommenem Deckel 13 lässt der Messzellen-Träger 10 sich aus dem Gehäuse 3 entnehmen und später wieder einsetzen. Jede Messzelle 20.1, 20.2, 20.3 lässt sich aus der Aufnahme A.1, A.2, A.3 entnehmen und wieder einsetzen. Diese Ausgestaltung erleichtert es, eine defekte Messzelle 20.1, 20.2, 20.3 zu erneuern. Möglich ist auch, dass jede Messzelle 20.1, 20.2, 20.3 fest in die zugeordnete Aufnahme A.1, A.2, A.3 eingesetzt ist und nur mitsamt dem gesamten Messzellen-Träger 10 ausgetauscht werden kann.

In einer Ausgestaltung behält der Deckel 13 während eines Einsatzes des PIDs 100 seine Position relativ zum Gehäuse 3 bei. In einer anderen Ausgestaltung lässt sich der Deckel 13 relativ zum Gehäuse 3 um die Mittelachse MA drehen. Auch bei der drehbaren Ausgestaltung ist der Deckel 13 fluiddicht mit dem Gehäuse 3 verbunden.

In einer Ausgestaltung befindet sich zwischen dem Deckel 13 und einer Messzelle 20.1, 20.2, 20.3 jeweils ein mechanischer Filter (nicht gezeigt), beispielsweise ein Vlies. Möglich ist auch ein durchgehender mechanischer Filter für alle Messzellen 20.1, 20.2, 20.3. Der mechanische Filter für eine Messzelle 20.1, 20.2, 20.3 befindet sich zwischen der Messzelle 20.1, 20.2, 20.3 und dem Deckel 13 und ist mit der Aufnahme A.1, A.2, A.3 verbunden. Möglich ist auch, dass der oder jeder mechanische Filter in den Deckel 13 eingelassen ist. Der zugeordnete Filter reduziert die Gefahr, dass Partikel und Schadstoffe die Messzelle 20.1, 20.2, 20.3 erreichen. Bevorzugt lässt sich bei abgenommenem Deckel 13 ein mechanischer Filter austauschen, beispielsweise wenn er zugesetzt oder defekt ist.

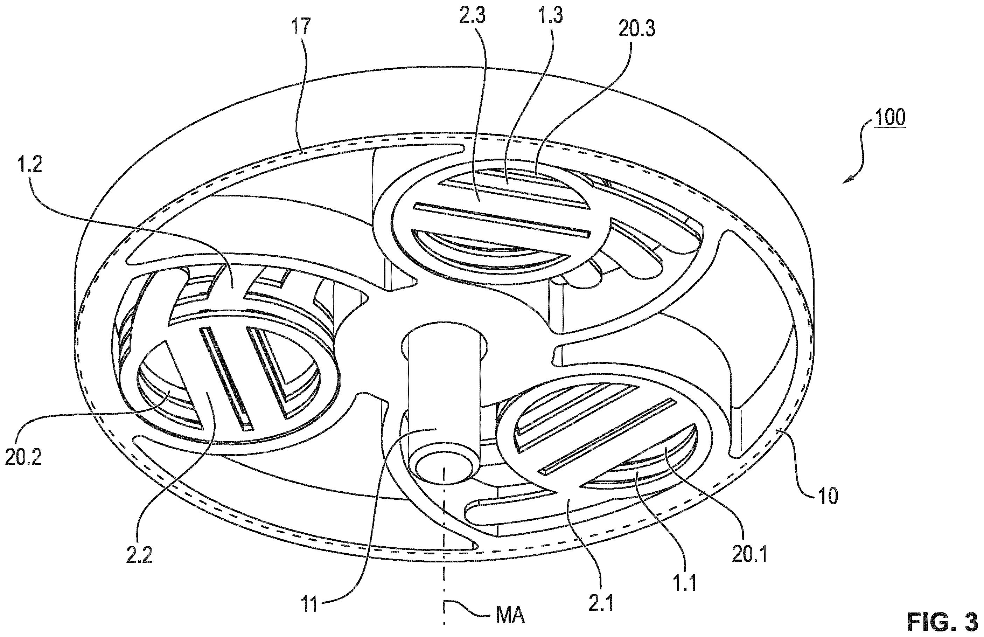

Figur 2 zeigt diesen Messzellen-Träger 10 sowie das Gehäuse 3 aus einer Betrachtungsrichtung schräg von oben, in der die Messzellen 20.1, 20.2, 20.3 zum Betrachter zeigen, wobei der Deckel 13 für das Gehäuse 3 nicht gezeigt wird. Die Strahlungsquelle 4 befindet sich im Inneren des Gehäuses 3 und schräg unterhalb des Messzellen-Trägers 10. Der Messzellen-Träger 10 befindet sich also zwischen der Strahlungsquelle 4 und dem Deckel 13. Figur 3 zeigt den Messzellen-Träger 10 aus einer Betrachtungsrichtung schräg von unten, wobei das Gehäuse 3 fortgelassen ist. In der Betrachtungsrichtung von Figur 3 befindet der Deckel 13 sich schräg hinter dem Messzellen-Träger 10 und ist nicht zu sehen.

Zu jedem Zeitpunkt während eines Einsatzes des PIDs 100 steht jeweils mindestens eine Messzelle 20.1, 20.2, 20.3, bevorzugt genau eine Messzelle 20.1, 20.2, 20.3, in einer Fluidverbindung mit dem zu überwachenden räumlichen Bereich, sodass das Gas G aus dem zu überwachenden Bereich diese Messzelle 20.1, 20.2, 20.3 erreichen kann. Möglich ist, dass in einem Ruhezustand der PID 100 und damit alle Messzellen 20.1, 20.2, 20.3 vollständig von der Umgebung getrennt sind.

Unterschiedliche Ausgestaltungen sind möglich, wie während eines Einsatzes bewirkt wird, dass das Gas G mindestens eine Messzelle 20.1, 20.2, 20.3 erreichen kann. Diese Ausgestaltungen werden nachfolgend mit Bezug auf Figur 4 bis Figur 7 beschrieben. Die drei Messzellen 20.1, 20.2, 20.3 sind in Figur 4 bis Figur 7 nur schematisch dargestellt. Bei den meisten Ausgestaltungen des erfindungsgemäßen PIDs 100 steht während eines Einsatzes nicht jede Messzelle 20.1, 20.2, 20.3 dauerhaft in einer Fluidverbindung mit der Umgebung, sondern nur jeweils genau eine.

Figur 4 zeigt eine erste Ausgestaltung des PIDs 100. In den Deckel 13 ist eine Öffnung Ö.13 eingelassen, welche exzentrisch angeordnet, also von der Mittelachse MA beabstandet ist. Der Deckel 13 ist bevorzugt mit dem Gehäuse 3 mechanisch und lösbar verbunden, beispielsweise durch einen Schraubverschluss, Schnappverschluss oder Rastverschluss, und wird bei einem Einsatz nicht relativ zum Gehäuse 3 bewegt, sondern nur optional für eine Reinigung oder Reparatur abgenommen. Bevorzugt ist die Strahlungsquelle 4 fest mit dem Gehäuse 3 verbunden. Bevorzugt ist auch die Strahlungsquelle 4 von der Mittelachse MA beabstandet, also exzentrisch angeordnet. Die Strahlungsrichtung St ist parallel zur Mittelachse MA und auf die Öffnung Ö.13 zu gerichtet. Ausreichend ist, dass die Strahlungsquelle 4 elektromagnetische Strahlung in Form eines relativ schmalen Kegels emittiert. die emittierte elektromagnetische Strahlung durchdringt die Platte 17 und erreicht zu jedem Zeitpunkt abhängig vom Zustand des PIDs 100 jeweils mindestens eine Messzelle 20.1, 20.2, 20.3.

Der Messzellen-Träger 10 ist relativ zum Gehäuse 3, zum Deckel 13 und zur Strahlungsquelle 4 um die Mittelachse MA drehbar. Der Messzellen-Träger 10 ist in einer Realisierungsform drehfest mit einer Welle 11 verbunden. Ein ansteuerbarer Stellantrieb 14 vermag die Welle 11 und damit den Messzellen-Träger 10 mitsamt den Messzellen 20.1, 20.2, 20.3 um die Mittelachse MA zu drehen. Der Stellantrieb 14 kann innerhalb oder außerhalb des Gehäuses 3 angeordnet sein, in den Ausgestaltungen gemäß Figur 4, Figur 6 und Figur 7 befindet er sich innerhalb des Gehäuses 3. Ein schematisch gezeigtes signalverarbeitendes Steuergerät (control unit) 30 vermag optional Benutzereingaben zu verarbeiten, die weiter unten beschrieben sind, und als Reaktion auf eine Benutzereingabe sowie optional auf Messwerte und / oder abhängig von einem Signal einer Systemuhr des PIDs 100 den Stellantrieb 14 anzusteuern. Das Steuergerät 30 vermag insbesondere von jeder Messzelle jeweils ein Signal zu empfangen und zu verarbeiten.

Jeder Messzelle 20.1, 20.2, 20.3 ist jeweils eine Rotationsposition des Messzellen-Trägers 10 10 relativ zum Deckel 13 und relativ zur Strahlungsquelle 4 zugeordnet. Falls sich der Messzellen-Träger 10 in derjenigen Rotationsposition befindet, die der Messzelle 20.x (x=1,2,3) zugeordnet ist, so befindet sich diese Messzelle 20.x zwischen der Strahlungsquelle 4 und der Öffnung Ö.13. Bevorzugt liegen die Strahlungsquelle 4, die Messzelle 20.x und die Öffnung Ö.13 auf einer Linie. Die elektromagnetische Strahlung, die in die Strahlungsrichtung St emittiert wird, durchdringt daher die Messzelle 20.x. Die Messzelle 20.x steht über die Öffnung Ö.13 in einer Fluidverbindung mit dem zu überwachenden Bereich, sodass das zu untersuchende Gas G durch die Öffnung Ö.13 hindurch die Messzelle 20.x erreichen kann. Bevorzugt verhindert der Deckel 13, dass eine relevante Menge des Gases G eine weitere Messzelle 20.y (y ≠ x) erreichen kann. Dadurch wird die Gefahr reduziert, dass die weitere Messzelle 20.y durch Schadgase oder Ablagerungen beschädigt wird. Beispielsweise tritt zwischen dem Deckel 13 und dem Messzellen-Träger 10 nur ein schmaler Spalt auf.

Der Stellantrieb 14 ist so ausgestaltet, dass er den Messzellen-Träger 10 in jede Rotationsposition drehen kann, die einer Messzelle 20.1, 20.2, 20.3 zugeordnet ist, im Ausführungsbeispiel also in eine von drei möglichen Rotationspositionen. Bevorzugt hält der Stellantrieb 14 den Messzellen-Träger 10 in dieser Rotationsposition, bis der Stellantrieb 14 wieder angesteuert wird. Möglich ist, dass ein Schnappverschluss oder Rastverschluss den Messzellen-Träger 10 in einer bestimmten Rotationsposition hält und der Stellantrieb 14 den Messzellen-Träger 10 gegen die Kraft dieses Verschlusses zu drehen vermag.

Im Ausführungsbeispiel tritt bei N Messzellen zwischen zwei benachbarten Rotationsposition ein Winkel von 360° / N auf. Möglich ist auch, dass die Rotationspositionen ungleich über einen Vollkreis verteilt sind.

Anstelle eines Stellantriebs oder zusätzlich zum Stellantrieb 14 kann der Messzellen-Träger 10 auch mechanisch mit einem Griff oder einem sonstigen Betätigungselement (nicht gezeigt) verbunden sein. Ein Benutzer kann das Betätigungselement von außen betätigen, um manuell den Messzellen-Träger 10 relativ zum Gehäuse 3 und damit relativ zur Strahlungsquelle 4 und zum Deckel 13 um die Mittelachse MA zu drehen. Möglich ist auch, dass der Benutzer direkt den Messzellen-Träger 10 relativ zum Gehäuse 3 drehen kann, beispielsweise nach Art einer Pfeffermühle.

Falls der PID 100 ein solches Betätigungselement umfasst, so ist der Messzellen-Träger 10 bevorzugt drehbar auf einer Achse gelagert oder drehfest mit einer drehbar gelagerten Achse verbunden, wobei diese Achse an die Stelle der Welle 11 von Figur 4 tritt. Dank dieser Ausgestaltung lässt der Messzellen-Träger 10 sich auch dann drehen, wenn der PID 100 keinen Stellantrieb 14 aufweist oder aber der Stellantrieb 14 oder die Spannungsversorgungseinheit defekt sind.

Falls den Messzellen 20.1, 20.2, 20.3 insgesamt mindestens zwei unterschiedliche Konzentrations-Bereiche zugeordnet sind, so zeigt bevorzugt eine Menge von Anzeigeelementen am Gehäuse 3 dem Benutzer an, welche Rotationsposition des Messzellen-Trägers 10 zu welcher Messzelle 20.1, 20.2, 20.3 und damit zu welchem Konzentrations-Bereich gehört. Bevorzugt rastet der Messzellen-Träger 10 in jeder Rotationsposition für eine Messzelle 20.1, 20.2, 20.3 ein, sodass der Benutzer das Einrasten bemerkt.

Figur 5 zeigt eine zweite Ausgestaltung, bei der nicht notwendigerweise ein Stellantrieb 14 verwendet wird. Der Messzellen-Träger 10 ist fest mit dem Gehäuse 3 verbunden, kann sich also insbesondere nicht um die Mittelachse MA drehen. Bei der gezeigten Realisierungsform lässt sich der Deckel 13 relativ zum Gehäuse 3 und damit relativ zum Messzellen-Träger 10 um die Mittelachse MA drehen und rastet bei dieser Drehung in einer ausgewählten von drei möglichen Rotationspositionen relativ zum Gehäuse 3 ein. In den Deckel 13 sind zwei Öffnungen Ö.a, Ö.b eingelassen. Dank dieser Öffnungen Ö.a, Ö.b stehen während eines Einsatzes in jeder möglichen Rotationsposition jeweils zwei der drei Messzellen 20.1, 20.2, 20.3 in einer Fluidverbindung mit dem zu überwachenden Bereich, sodass das Gas G diese beiden Messzellen erreichen kann. Die dritte Messzelle ist fluiddicht von der Umgebung getrennt, wozu insbesondere der Deckel 13 beiträgt. In der Realisierungsform, die in Figur 5 gezeigt wird, steht die Messzelle 20.1 über die Öffnung Ö.a in einer Fluidverbindung mit der Umgebung, die Messzelle 20.2 über die Öffnung Ö.b. Die Messzelle 20.3 ist fluiddicht von der Umgebung getrennt.

Jeweils zwei der drei Messzellen 20.1, 20.2, 20.3 arbeiten also zeitlich parallel zueinander. Im Gegensatz zur ersten Ausgestaltung ist bei der zweiten Ausgestaltung die Strahlungsquelle 4 mittig angeordnet, sodass die Strahlungsrichtung St mit der Mittelachse MA übereinstimmt. Daher erreicht die emittierte elektromagnetische Strahlung alle Messzellen 20.1, 20.2, 20.3 durch die Platte 17 hindurch mit annähernd derselben Intensität. In der gezeigten Realisierungsform kann ein Benutzer den Deckel 13 relativ zum Gehäuse 3 von einer Rotationsposition in eine andere Rotationsposition drehen.

In einer Ausgestaltung haben beide Öffnungen Ö.a, Ö.b die gleiche Querschnittsfläche. In einer anderen Ausgestaltung weisen die beiden Öffnungen Ö.a, Ö.b unterschiedliche Querschnittsflächen auf, sodass die Volumenflüsse aus dem zu überwachenden Bereich zu den drei Messzellen 20.1, 20.2, 20.3 sich voneinander unterscheiden können.

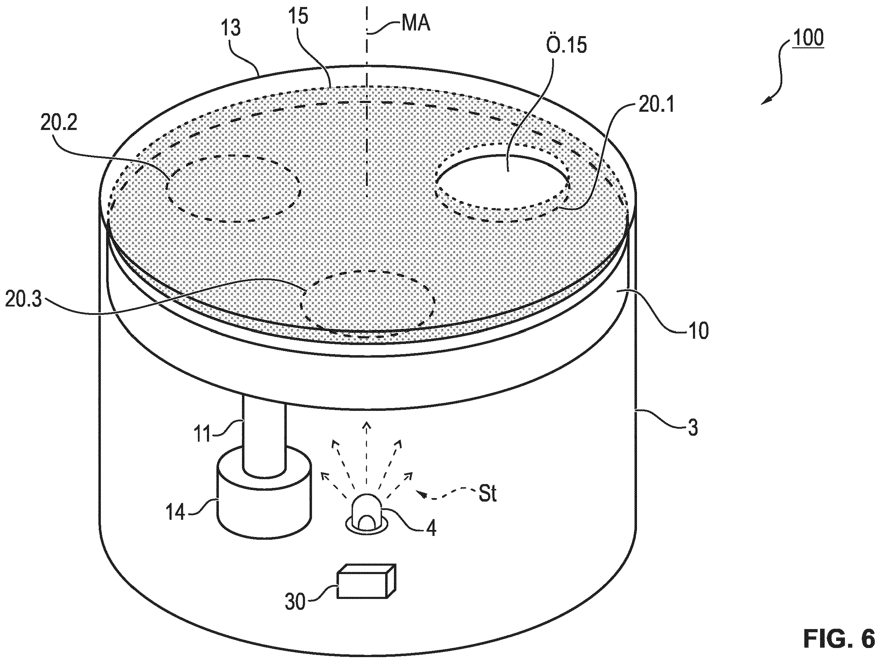

Figur 6 zeigt eine dritte Ausgestaltung des PIDs 100. Genau wie bei der zweiten Ausgestaltung ist die Strahlungsquelle 4 auch bei der dritten Ausgestaltung mittig angeordnet und fest mit dem Gehäuse 3 verbunden. Der Messzellen-Träger 10 ist hingegen fest mit dem Gehäuse 3 verbunden, und in den Deckel 13 ist für jede Messzelle 20.1, 20.2, 20.3 jeweils eine Öffnung Ö.a, Ö.b, Ö.c eingelassen. Diese Öffnungen Ö.a, Ö.b, Ö.c werden in Figur 6 nicht gezeigt. Weder der Messzellen-Träger 10 noch der Deckel 13 können sich relativ zum Gehäuse 3 oder relativ zur Strahlungsquelle 4 bewegen.

Genau wie bei der ersten Ausgestaltung (Figur 4) umfasst der PID 100 gemäß der dritten Ausgestaltung einen Stellantrieb 14 und eine Welle 11, wobei der Stellantrieb 14 die Welle 11 zu drehen vermag. Zwischen dem Deckel 13 und dem Messzellen-Träger 10 ist eine Blende 15 angeordnet, welche die Form einer Scheibe aufweist und um die Mittelachse MA drehbar ist. Die Blende 15 trennt bevorzugt die Messzellen 20.1, 20.2, 20.3 von der Umgebung. Die Blende 15 steht in einer Wirkverbindung mit der Welle 11, sodass der Stellantrieb 14 mittels der Welle 11 die Blende 15 um die Mittelachse MA drehen kann. Möglich ist, dass zwischen der Mittelachse der Welle 11 und der Mittelachse MA der Blende 15 ein Abstand auftritt. Die Blende 15 weist eine Blenden-Öffnung Ö.15 auf, welche von der Mittelachse MA beabstandet ist.

Analog zur ersten Ausgestaltung ist bei der dritten Ausgestaltung jeder Messzelle 20.1, 20.2, 20.3 auf dem Messzellen-Träger 10 jeweils eine Rotationsposition der Blende 15 zugeordnet. Falls die Blende 15 sich in derjenigen Rotationsposition befindet, die der Messzelle 20.x zugeordnet ist, so ist durch die Blenden-Öffnung Ö.15 und durch eine überlappende Öffnung im Deckel 13 hindurch eine Fluidverbindung zwischen der Messzelle 20.x und dem zu überwachenden Bereich hergestellt, sodass das Gas G durch die Blenden-Öffnung Ö.15 und die überlappende Öffnung im Deckel 13 hindurch die Messzelle 20.x erreichen kann. Bevorzugt verhindert die Blende 15, dass eine weitere Messzelle 20.y (y ≠ x) in einer Fluidverbindung mit dem zu überwachenden räumlichen Bereich steht. Beispielsweise tritt zwischen der Blende 15 und dem Messzellen-Träger 10 ein schmaler Spalt auf, sodass nur eine geringere Menge des Gases G die weitere Messzelle 20.y erreichen kann.

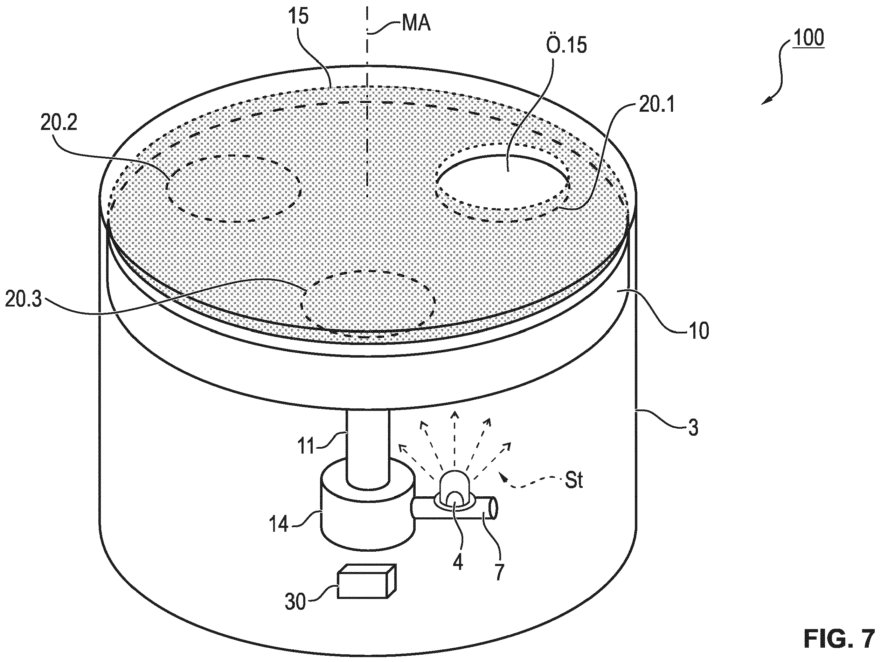

Figur 7 zeigt eine vierte Ausgestaltung. Im Gegensatz zu allen bisherigen Ausgestaltungen ist die Strahlungsquelle 4 nicht fest angeordnet. Vielmehr ist die Strahlungsquelle 4 auf einem Querträger 7 befestigt, der bevorzugt senkrecht oder aber schräg auf der Mittelachse MA steht. Dieser Querträger 7 ist mechanisch mit dem Stellantrieb 14 oder mit der Welle 11 drehfest verbunden. Die Mittelachse MA ist zugleich die Drehachse der Welle 11. Außerdem ist genau wie bei der dritten Ausgestaltung eine drehbare Blende 15 drehfest mit der Welle 11 verbunden. Der Messzellen-Träger 10 ist stationär angeordnet. Der Stellantrieb 14 vermag die Welle 11 und damit die Strahlungsquelle 4 und die Blende 15 mit der Blenden-Öffnung Ö.15 in jede Rotationsposition, die einer Messzelle 20.1, 20.2, 20.3 zugeordnet ist, zu drehen. Bevorzugt kann bei der vierten Ausgestaltung die Blende 15 sich nicht relativ zur Strahlungsquelle 4 drehen.

Unterschiedliche Betriebsmodi des erfindungsgemäßen PIDs 100 sind möglich. Falls nicht anders vermerkt, lässt sich jede der gerade beschriebenen Ausführungsformen gemäß Figur 4 bis Figur 7 mit jedem nachfolgend beschriebenen Betriebsmodus kombinieren. In einer Ausgestaltung kann ein Benutzer einen Betriebsmodus aus mindestens zwei verschiedenen möglichen Betriebsmodi auswählen.

Zunächst werden Betriebsmodi für diejenige Realisierungsform des PIDs 100 beschrieben, bei der jeder Messzelle 20.1, 20.2, 20.3 ein anderer Konzentrations-Bereich zugeordnet ist, insgesamt also so viele unterschiedliche Konzentrations-Bereiche, wie es Messzellen gibt, verfügbar sind.

In einem manuellen Betriebsmodus, der sich für die erste Ausgestaltung (Figur 4), die dritte Ausgestaltung (Figur 6) und die vierte Ausgestaltung (Figur 7) anwenden lässt, wählt ein Benutzer einen Konzentrations-Bereich aus. Dieser Konzentrations-Bereich ist einer Messzelle 20.x zugeordnet. Das Steuergerät 30 wertet diese Benutzereingabe aus und steuert den Stellantrieb 14 an. Der angesteuerte Stellantrieb 14 dreht den Messzellen-Träger 10 (erste Ausgestaltung) oder die Blende 15 (dritte Ausgestaltung) oder die Strahlungsquelle 4 und die Blende 15 (vierte Ausgestaltung) um die Mittelachse MA in diejenige Rotationsposition, die dieser ausgewählten Messzelle 20.x zugeordnet ist. Möglich ist natürlich, dass der Benutzer nacheinander mindestens zwei verschiedene Konzentrations-Bereiche auswählt und der Stellantrieb 14 entsprechend reagiert.

In einer alternativen Ausgestaltung umfasst der PID 100 keinen Stellantrieb 14, sondern einen Griff oder ein sonstiges Betätigungselement. Der Benutzer dreht den Messzellen-Träger 10 relativ zum Gehäuse 3 in eine gewünschte Rotationsposition. Die Anzeigeelemente auf dem Gehäuse 3 zeigen für jeden Konzentrations-Bereich die jeweilige Rotationsposition.

In einem automatischen Betriebsmodus dreht der Stellantrieb 14 den Messzellen-Träger 10 bzw. die Blende 15 bzw. die Strahlungsquelle 4 und die Blende 15 nacheinander in jede mögliche Rotationsposition, sodass nacheinander jede Messzelle 20.1, 20.2, 20.3 in einer Fluidverbindung mit dem zu überwachenden Bereich steht, wobei diese Fluidverbindung durch die Öffnung Ö.13 oder Ö.15 hindurch führt. Der Benutzer braucht keinen Konzentrations-Bereich auszuwählen, sondern lediglich den PID 100 und optional den automatischen Betriebsmodus zu aktivieren. Bevorzugt wird die Abfolge, dass der Stellantrieb 14 den Messzellen-Träger 10 bzw. die Blende 15 bzw. den Stellantrieb 4 und die Blende 15 nacheinander in jede mögliche Rotationsposition dreht, wiederholt ausgeführt, beispielsweise mit festen vorgegebenen Zeitintervallen.

In vielen Fällen vermag ein derartig ausgestalteter PID 100 die Konzentration von ionisierbarer Substanz dann zu messen, wenn diese Konzentration in den Konzentrations-Bereich von mindestens einer Messzelle 20.1, 20.2, 20.3 fällt. Der PID 100 vermag das Vorhandensein von ionisierbarer Substanz dann zu entdecken, wenn deren Konzentration oberhalb der kleinsten unteren Schranke eines Konzentrations-Bereich liegt. Ein herkömmlicher PID 50 vermag hingegen die Konzentration nur in einen Konzentrations-Bereich zu messen und vermag das Vorhandensein von ionisierbarer Substanz dann nicht zu detektieren, wenn deren Konzentration unterhalb der unteren Schranke dieses einen Konzentrations-Bereichs liegt.

In einer Realisierungsform des automatischen Betriebsmodus bewegt der Stellantrieb 14 den Messzellen-Träger 10 bzw. die Blende 15 bzw. die Strahlungsquelle 4 und die Blende 15 wie folgt: Zunächst steht diejenige Messzelle, welcher der Konzentrations-Bereich mit den größten Konzentrationen zugeordnet ist, in einer Fluidverbindung mit dem zu überwachenden Bereich, anschließend diejenige Messzelle, welcher der Konzentrations-Bereich mit der zweitgrößten Konzentration zugeordnet ist, usw. Diese Ausgestaltung führt dazu, dass das Vorhandensein von ionisierbarer Substanz mit einer hohen Konzentration besonders rasch detektiert wird.

In einem möglichen Betriebsmodus, welcher sich für die zweite Realisierungsform (Figur 5) anwenden lässt, sind mehrere Messzellen aktiv, aber nicht alle Messzellen, im gezeigten Ausführungsbeispiel also zwei der drei Messzellen 20.1, 20.2, 20.3. Dadurch liegen dem Steuergerät 30 mehrere, im Ausführungsbeispiel zwei Signale vor, die sich auf mehrere, im Ausführungsbeispiel zwei unterschiedliche Konzentrations-Bereiche beziehen. In einem anderen möglichen Betriebsmodus ist mindestens eine Messzelle abgeschaltet, beispielsweise als Reaktion auf eine Benutzereingabe. Optional sind alle Messzellen bis auf eine Messzelle abgeschaltet, und nur genau eine Messzelle ist aktiv.

Nachfolgend werden verschiedene Betriebsmodi für diejenige Realisierungsform beschrieben, bei denen allen Messzellen 20.1, 20.2, 20.3 derselbe Konzentrations-Bereich zugeordnet ist. Bevorzugt sind die drei Messzellen 20.1, 20.2, 20.3 baugleich ausgestaltet. Weil erfindungsgemäß der PID 100 mindestens zwei Messzellen umfasst, im Ausführungsbeispiel drei Messzellen 20.1, 20.2, 20.3, wird Redundanz erzielt. Außerdem wird die Lebensdauer des PIDs 100 verglichen mit dem PID 50 gemäß Figur 1 verlängert, weil in der Regel eine Messzelle eine kürzere Lebensdauer hat als die übrigen Bestandteile eines PIDs.

In einem zeitgesteuerten Betriebsmodus, der für die erste Ausgestaltung, die dritte Ausgestaltung und die vierte Ausgestaltung anwendbar ist, optional auch für die zweite Ausgestaltung, dreht der Stellantrieb 14 den Messzellen-Träger 10 oder die Blende 15 oder die Strahlungsquelle 4 und die Blende 15 zeitgesteuert, beispielsweise in regelmäßigen zeitlichen Abständen, von einer Rotationsposition in eine andere Rotationsposition, bevorzugt in die benachbarte Rotationsposition. Bei N Messzellen (N > 1) beträgt die Einsatzdauer einer Messzelle 20.x 1/N der gesamten Einsatzdauer des PIDs 100. In der restlichen Zeit steht diese Messzelle 20.x nicht in einer Fluidverbindung mit der Umgebung. Umgebungseinflüsse können daher nicht diese Messzelle beeinflussen. Weil jede Messzelle 20.1, 20.2, 20.3 eine deutliche kürzere Einsatzdauer als der gesamte PID 100 aufweist, verlängert diese Ausgestaltung die mögliche Nutzungsdauer des PIDs 100 verglichen mit einem PID mit einer Messzelle.

In einer Ausgestaltung vermag das Steuergerät 30 automatisch zu erkennen, ob eine Messzelle 20.1, 20.2, 20.3 intakt oder defekt ist. Beispielsweise stellt das Steuergerät 30 automatisch fest, ob ein Strom durch die Messzelle 20.1, 20.2, 20.3 fließt oder nicht. Falls das Steuergerät 30 das Ereignis detektiert, dass die aktuell aktive Messzelle defekt ist, so löst das Steuergerät 30 das Ereignis aus, dass der Stellantrieb 14 den Messzellen-Träger 10 bzw. die Blende 15 bzw. die Strahlungsquelle 4 und die Blende 15 um die Mittelachse MA in eine andere Rotationsposition dreht. Die aktive Messzelle ist diejenige, die aktuell in einer Fluidverbindung mit dem zu überwachenden Bereich steht. Dank der Erfindung ist es also auch bei Ausfall einer Messzelle 20.1, 20.2, 20.3 nicht erforderlich, den PID 100 sofort zu reparieren oder auszutauschen.

Die folgende Ausgestaltung lässt sich für den Fall anwenden, dass den Messzellen 20.1, 20.2, 20.3 insgesamt mindestens zwei unterschiedliche Konzentrations-Bereiche zugeordnet sind, wobei die untere Schranke eines ersten Konzentrations-Bereichs kleiner ist als die untere Schranke eines zweiten Konzentrations-Bereichs. Für die folgende Beschreibung sei der erste Konzentrations-Bereich der Messzelle 20.1 zugeordnet, der zweite Konzentrations-Bereich der Messzelle 20.2. Bei intakten Messzellen detektieren beide Messzellen 20.1, 20.2 das Vorhandensein von ionisierbarer Substanz, vorausgesetzt die Konzentration liegt oberhalb der kleineren unteren Schranke. Falls die Messzelle 20.2 hingegen das Vorhandensein von ionisierbarer Substanz detektiert, die Messzelle 20.1 aber nicht, so liegt ein Defekt vor. Mindestens eine Messzelle 20.1, 20.2 oder eine Auswerteeinheit sind defekt. Das Steuergerät 30 detektiert automatisch dieses Ereignis und gibt bevorzugt eine entsprechende Meldung aus.

Der zeitgesteuerten Betriebsmodus lässt sich mit dem ereignisgesteuerten Betriebsmodus verbinden. Der Stellantrieb 14 dreht den Messzellen-Träger 10 bzw. die Blende 15 bzw. die Strahlungsquelle 4 und die Blende 15 nur in eine solche Rotationsposition, die einer intakten Messzelle zugeordnet ist. Ein Rotationsposition für eine defekte Messzelle wird übersprungen. Dadurch wird vermieden, dass eine defekte Messzelle zu einer aktiven Messzelle wird.

In einem Betriebsmodus, der für die zweite Ausgestaltung verwendbar ist, fasst das Steuergerät 30 die Signale aller aktiven Messzellen zusammen, im Ausführungsbeispiel also die Signale der beiden aktiven Messzellen, in Figur 6 also 20.1 und 20.2. Beispielsweise bildet das Steuergerät 30 einen Mittelwert oder Median oder wählt das Signal mit der höchsten Konzentration aus. Diese Ausgestaltung führt zu einer besonders hohen Zuverlässigkeit, weil in vielen Fällen ein Messfehler einer Messzelle überdeckt oder kompensiert wird.

In einem anderen Betriebsmodus, der ebenfalls für die zweite Ausgestaltung verwendbar ist, lässt sich der PID 100 wahlweise in einem Überwachungsmodus oder in einem Messmodus betreiben. Im Überwachungsmodus ist nur eine Messzelle aktiv, während im Messmodus zwei Messzellen oder sogar alle drei Messzellen 20.1, 20.2, 20.3 aktiv sind. Insbesondere lässt sich im Überwachungsmodus der PID 100 in jeder Ausgestaltung der Erfindung, bei der genau eine Messzelle aktiv ist, betreiben. Anfänglich wird der PID 100 im Überwachungsmodus betrieben. Falls die aktive Messzelle das Vorhandensein von ionisierbarer Substanz detektiert, wird der PID 100 automatisch oder auch manuell von einem Benutzer in den Messmodus umgeschaltet, und die beiden aktiven Messzellen 20.1, 20.2, 20.3 überprüfen dieses Ergebnis. Diese Ausgestaltung reduziert die Gefahr von Fehlalarmen. In vielen Fällen lässt sich im Messmodus die Konzentration von ionisierbarer Substanz mit einer höheren Zuverlässigkeit messen als im Überwachungsmodus.

**Bezugszeichenliste**

| 1 | Messelektrode der Messzelle 20 |
|---|---|
| 1.1 | Messelektrode der Messzelle 20.1 |
| 1.2 | Messelektrode der Messzelle 20.2 |
| 1.3 | Messelektrode der Messzelle 20.3 |
| 2 | Gegenelektrode der Messzelle 20 |
| 2.1 | Gegenelektrode der Messzelle 20.1 |
| 2.2 | Gegenelektrode der Messzelle 20.2 |
| 2.3 | Gegenelektrode der Messzelle 20.3 |
| 3 | Gehäuse des PIDs 50, 100, umschließt die Strahlungsquelle 4, die oder jede Messzelle 20, 20.1, 20.2, 20.3 sowie den optionalen Stellantrieb 14 und die optionale Welle 11 und den optionalen Querträger 7 |
| 4 | Strahlungsquelle in Form einer UV-Lampe oder einer LED-Anordnung oder einer Laserdiode, emittiert elektromagnetische Strahlung in die Strahlungsrichtung St, fest oder drehbar im Gehäuse 3 angeordnet |
| 5 | poröse Membrane im Gehäuse 3 |
| 7 | Querträger, der mit dem Stellantrieb 14 oder der Welle 11 verbunden ist und die Strahlungsquelle 4 trägt |
| 10 | scheibenförmiger Messzellen-Träger, trägt die drei Messzellen 20.1, 20.2, 20.3 in den Aussparungen A.1, A.2, A.3, rotationssymmetrisch zur Mittelachse MA, drehbar um die Mittelachse MA oder stationär angeordnet |
| 11 | Welle zum Drehen des Messzellen-Trägers 10 oder der Blende 15 oder der Strahlungsquelle 4 und der Blende 15, wird vom Stellantrieb 14 gedreht |
| 13 | Deckel auf dem Gehäuse 3, umfasst in einer Ausgestaltung eine Öffnung Ö.13 und in einer anderen Ausgestaltung drei Öffnungen Ö.a, Ö.b, Ö.c |
| 14 | ansteuerbarer Stellantrieb zum Drehen der Welle 11, in einer Ausgestaltung im Gehäuse 3 angeordnet |
| 15 | optionale Blende, relativ zum Gehäuse 3 drehbar, drehfest mit der Welle 11 verbunden, weist die Öffnung Ö.15 auf |
| 17 | Platte auf die Rückseite des Messzellen-Trägers 10, 10, fluiddicht und für elektromagnetische Strahlung durchlässig |

(fortgesetzt)

| | |
|---|---|
| 20 | Messzelle des PIDs 50, umfasst die Messelektrode 1 und die Messelektrode 2 |
| 20.1 | Messzelle auf dem Messzellen-Träger 10, umfasst die Messelektrode 1.1 und die Gegenelektrode 2.1 |
| 20.2 | Messzelle auf dem Messzellen-Träger 10, umfasst die Messelektrode 1.2 und die Gegenelektrode 2.2 |
| 20.3 | Messzelle auf dem Messzellen-Träger 10, umfasst die Messelektrode 1.3 und die Gegenelektrode 2.3 |
| 30 | signalverarbeitendes Steuergerät, empfängt jeweils ein Signal von den Messzellen 20.1, 20.2, 20.3 sowie optional eine Benutzereingabe, vermag den Stellantrieb 14 anzusteuern |
| 50 | PID, umfasst eine Messzelle 20, die Strahlungsquelle 4 und das Gehäuse 3 |
| 100 | erfindungsgemäßer PID, umfasst die drei Messzellen 20.1, 20.2, 20.3 auf dem Messzellen-Träger 10, die Strahlungsquelle 4, das Gehäuse 3, den Deckel 13 und optional den Stellantrieb 14 und die Welle 11 |
| A.1, A.2, A.3 | Aussparungen im Messzellen-Träger 10 zur Aufnahme jeweils einer Messzelle 20.1, 20.2, 20.2 |
| G | zu untersuchendes Gas, kann mindestens eine zu detektierende ionisierbare Substanz umfassen |
| M | Molekül einer ionisierbaren Substanz in dem zu untersuchenden Gas G |
| MA | Mittelachse des Messzellen-Trägers 10, stimmt in einigen Ausgestaltungen mit der Mittelachse der Welle 11 über ein |
| Ö.13 | Öffnung im Deckel 13 |
| Ö.15 | Öffnung in der Blende 15 |
| Ö.a, Ö.b, Ö.c | Öffnungen im Deckel 13 |
| St | Strahlungsrichtung, in welche die Strahlungsquelle 4 elektromagnetische Strahlung emittiert |

**Patentansprüche**

1.  Photo-Ionisations-Detektor (100) zum Detektieren einer ionisierbaren Substanz in einem Gas (G),

    wobei der Photo-Ionisations-Detektor (100)

    - eine Strahlungsquelle (4),
    - einen Messzellen-Träger (10) und
    - mindestens zwei Messzellen (20.1, 20.2, 20.3), die auf dem Messzellen-Träger (10) montiert sind,

    umfasst,
    wobei die Strahlungsquelle (4) dazu ausgestaltet ist, ionisierende elektromagnetische Strahlung auf den Messzellen-Träger (10) zu zu emittieren,
    wobei jeder Messzelle (20.1, 20.2, 20.3) jeweils ein Zustand des Photo-Ionisations-Detektors (100) zugeordnet ist,
    wobei der Photo-Ionisations-Detektor (100) wahlweise in jedem Zustand, der einer Messzelle (20.1, 20.2, 20.3) zugeordnet ist, betreibbar ist,
    wobei der Photo-Ionisations-Detektor (100) so ausgestaltet ist, dass beim Betrieb des Photo-Ionisations-Detektors (100) in demjenigen Zustand, der einer Messzelle (20.1, 20.2, 20.3) zugeordnet ist,

    - eine Fluidverbindung zwischen einer Umgebung des Photo-Ionisations-Detektors (100) und dieser Messzelle (20.1, 20.2, 20.3) hergestellt ist,
    - wenigstens ein Teil der emittierten elektromagnetischen Strahlung diese Messzelle (20.1, 20.2, 20.3) erreicht und
    - die oder jede weitere Messzelle von der Umgebung fluiddicht getrennt ist und

wobei jede Messzelle (20.1, 20.2, 20.3)

- jeweils eine Messelektrode (1.1, 1.2, 1.3) umfasst, die eine messbare elektrische Eigenschaft aufweist, wobei die elektrische Eigenschaft durch eine Ionisierung von ionisierbarer Substanz im Gas (G) wenigstens zeitweise verändert wird oder veränderbar ist, und
- dazu ausgestaltet ist, abhängig von der elektrischen Eigenschaft ein Signal zu erzeugen, wobei das erzeugte Signal mit dem Vorhandensein und optional mit der Konzentration von ionisierbarer Substanz im Gas (G) korreliert.

2. Photo-Ionisations-Detektor (100) nach Anspruch 1,
**dadurch gekennzeichnet, dass**

jeder Messzelle (20.1, 20.2, 20.3) jeweils ein Konzentrations-Bereich zugeordnet ist,
wobei jede Messzelle (20.1, 20.2, 20.3) dazu ausgestaltet ist, das Signal dergestalt zu erzeugen,
dass das erzeugte Signal wenigstens die Informationen umfasst, ob in dem Gas (G) ionisierbare Substanz mit einer Konzentration, die im zugeordneten Konzentrations-Bereich liegt, enthalten ist oder nicht,
wobei bevorzugt das erzeugte Signal zusätzlich eine Information über die Konzentration von ionisierbarer Substanz umfasst.

3. Photo-Ionisations-Detektor (100) nach Anspruch 2,
**dadurch gekennzeichnet, dass**

die Messzellen (20.1, 20.2, 20.3) so ausgestaltet sind, dass mindestens zwei Konzentrations-Bereiche sich voneinander unterscheiden,
wobei bevorzugt diese beiden Konzentrations-Bereiche zueinander disjunkt sind.

4. Photo-Ionisations-Detektor (100) nach Anspruch 3,
**dadurch gekennzeichnet, dass**

einer ersten Messzelle (20.1) ein erster Konzentrations-Bereich zugeordnet ist und einer zweiten Messzelle (20.2) ein zweiter Konzentrations-Bereich,
wobei die untere Schranke des ersten Konzentrations-Bereichs kleiner ist als die untere Schranke des zweiten Konzentrations-Bereichs und
wobei der Photo-Ionisations-Detektor (100) dazu ausgestaltet ist, automatisch eine Fehlermeldung zu generieren, wenn
- die zweite Messzelle (20.2) ein Signal erzeugt, dass in dem Gas (G) ionisierbare Substanz enthalten ist, und
- die erste Messzelle (20.1) kein solches Signal erzeugt oder ein Signal erzeugt, dass in dem Gas (G) keine ionisierbare Substanz enthalten ist.

5. Photo-Ionisations-Detektor (100) nach einem der vorhergehenden Ansprüche,
**dadurch gekennzeichnet, dass**

der Photo-Ionisations-Detektor (100) ein Gehäuse (3) umfasst,
wobei das Gehäuse den Messzellen-Träger (10) und die Messzellen (20.1, 20.2, 20.3) umgibt,
wobei in das Gehäuse (3) mindestens eine Öffnung (Ö.13, Ö.a, Ö.b, Ö.c) eingelassen ist,
wobei das Gehäuse (3) den Messzellen-Träger (10) und die Messzellen (20.1, 20.2, 20.3) dergestalt von der Umgebung trennt,
dass das Gas (G) nur durch die oder mindestens eine Öffnung (Ö.13, Ö.a, Ö.b, Ö.c) im Gehäuse (3) hindurch eine Messzelle (20.1, 20.2, 20.3) erreicht, und
wobei beim Betrieb des Photo-Ionisations-Detektors (100) in demjenigen Zustand, der einer Messzelle (20.1, 20.2, 20.3) zugeordnet ist,
- das Gas (G) durch die oder eine Öffnung (Ö.13, Ö.a, Ö.b, Ö.c) im Gehäuse (3) hindurch diese Messzelle (20.1, 20.2, 20.3) erreicht und
- das Gehäuse (3) die oder mindestens eine, bevorzugt jede andere Messzelle fluiddicht von der Umgebung trennt.

6. Photo-Ionisations-Detektor (100) nach Anspruch 5,
**dadurch gekennzeichnet, dass**

eine Abfolge von Veränderungs-Zeitpunkten vorgegeben ist und
der Photo-Ionisations-Detektor (100) so ausgestaltet ist, dass

- zwischen zwei unmittelbar aufeinanderfolgenden Veränderungs-Zeitpunkten der Abfolge der Photo-Ionisations-Detektor (100) in demjenigen Zustand betrieben wird, der einer Messzelle (20.1, 20.2, 20.3) zugeordnet ist, und
- sowohl das Gas (G) als auch wenigstens ein Teil der emittierten elektromagnetischen Strahlung diese Messzelle (20.1, 20.2, 20.3) erreichen, und

der Photo-Ionisations-Detektor (100) dazu ausgestaltet ist,
bei Erreichen eines Veränderungs-Zeitpunkts der Abfolge
durch eine Bewegung der Messzellen (20.1, 20.2, 20.3) relativ zum Gehäuse (3) oder der oder mindestens einer Öffnung (Ö.13, Ö.a, Ö.b, Ö.c) relativ zum Gehäuse (3)
zu bewirken oder zu ermöglichen,
dass nach dem erreichten Veränderungs-Zeitpunkt

- der Photo-Ionisations-Detektor (100) in demjenigen Zustand, der einer anderen Messzelle (20.1, 20.2, 20.3) zugeordnet ist, betrieben wird und
- das Gas (G) und wenigstens ein Teil der emittierten elektromagnetischen Strahlung diese andere Messzelle (20.1, 20.2, 20.3) erreichen.

**7.** Photo-Ionisations-Detektor (100) nach einem der vorhergehenden Ansprüche,
**dadurch gekennzeichnet, dass**

der Messzellen-Träger (10) mitsamt den Messzellen (20.1, 20.2, 20.3) relativ zur Strahlungsquelle (4) um eine Drehachse (MA) drehbar ist,
wobei jeder Messzelle (20.1, 20.2, 20.3) auf dem Messzellen-Träger (10) jeweils eine Rotationsposition des Messzellen-Trägers (10) bezüglich der Drehachse (MA) zugeordnet ist und
wobei der Photo-Ionisations-Detektor (100) so ausgestaltet ist, dass dann, wenn der Messzellen-Träger (10) in der einer Messzelle (20.1, 20.2, 20.3) zugeordneten Rotationsposition ist,
- eine Fluidverbindung zwischen dieser Messzelle (20.1, 20.2, 20.3) und der Umgebung des Photo-Ionisations-Detektors (100) hergestellt ist,
- wenigstens ein Teil der emittierten elektromagnetischen Strahlung diese Messzelle (20.1, 20.2, 20.3) erreicht und
- mindestens eine andere Messzelle, bevorzugt jede andere Messzelle, fluiddicht von der Umgebung getrennt ist.

**8.** Photo-Ionisations-Detektor (100) nach Anspruch 7,
**dadurch gekennzeichnet, dass**

der Photo-Ionisations-Detektor (100) einen Stellantrieb (14) zum Drehen des Messzellen-Trägers (10) um die Drehachse (MA) aufweist,
wobei der Stellantrieb (14) dazu ausgestaltet ist, mindestens einmal eine Abfolge durchzuführen,
wobei der Stellantrieb (14) bei der oder jeder Durchführung der Abfolge den Messzellen-Träger (10) nacheinander in jede einer Messzelle (20.1, 20.2, 20.3) zugeordnete Rotationsposition dreht.

**9.** Photo-Ionisations-Detektor (100) nach Anspruch 8,
**dadurch gekennzeichnet, dass**

eine Abfolge von Auslöse-Zeitpunkten vorgegeben ist,
wobei der Photo-Ionisations-Detektor (100) dazu ausgestaltet ist, dass der Stellantrieb (14) zu jedem Auslöse-Zeitpunkt erneut die Durchführung der Abfolge zu beginnen.

**10.** Photo-Ionisations-Detektor (100) nach einem der vorhergehenden Ansprüche,
**dadurch gekennzeichnet, dass**

der Photo-Ionisations-Detektor (100) eine Blende (15) mit mindestens einer Öffnung (Ö.15) umfasst,
wobei die Blende (15)

- sich zwischen dem Messzellen-Träger (10) und einer Umgebung des Photo-Ionisations-Detektors (100) befindet und
- relativ zum Messzellen-Träger (10) um eine Drehachse (MA) drehbar ist,

wobei jeder Messzelle (20.1, 20.2, 20.3) jeweils eine Rotationsposition der Blende (15) bezüglich der optischen Mittelachse (MA) zugeordnet ist und
wobei der Photo-Ionisations-Detektor (100) so ausgestaltet ist, dass dann, wenn die Blende (15) in der einer Messzelle (20.1, 20.2, 20.3) zugeordneten Rotationsposition ist,

- eine Fluidverbindung zwischen dieser Messzelle (20.1, 20.2, 20.3) und der Umgebung des Photo-Ionisations-Detektors (100) hergestellt ist und
- wenigstens ein Teil der emittierten elektromagnetischen Strahlung diese Messzelle (20.1, 20.2, 20.3) erreicht,

wobei diese Fluidverbindung durch die oder eine Öffnung (Ö.15) in der Blende (15) hindurch führt und
wobei mindestens eine andere Messzelle, bevorzugt jede andere Messzelle, fluiddicht von der Umgebung getrennt ist.

**11.** Photo-Ionisations-Detektor (100) nach Anspruch 10,
**dadurch gekennzeichnet, dass**

der Photo-Ionisations-Detektor (100) einen Stellantrieb (14) zum Drehen der Blende (15) um die Drehachse (MA) aufweist,
wobei der Stellantrieb (14) dazu ausgestaltet ist, mindestens einmal eine Abfolge durchzuführen,
wobei der Stellantrieb (14) bei der Durchführung der Abfolge die Blende (15) nacheinander in jede einer Messzelle (20.1, 20.2, 20.3) zugeordnete Rotationsposition dreht.

**12.** Photo-Ionisations-Detektor (100) nach einem der vorhergehenden Ansprüche,
**dadurch gekennzeichnet, dass**

der Photo-Ionisations-Detektor (100) wahlweise in einem Überwachungsmodus oder in einem Messmodus betreibbar ist,
wobei im Überwachungsmodus genau eine Messzelle (20.1, 20.2, 20.3) in einer Fluidverbindung mit der Umgebung steht,
wobei im Messmodus mindestens zwei Messzellen gleichzeitig in jeweils einer Fluidverbindung mit der Umgebung stehen und
wobei der Photo-Ionisations-Detektor (100) so ausgestaltet ist,
dass das Ereignis, dass der im Überwachungsmodus betriebene Photo-Ionisations-Detektor (100) eine ionisierbare Substanz detektiert hat,
den Schritt auslöst, dass der Photo-Ionisations-Detektor (100) sich automatisch in den Messmodus umschaltet.

**13.** Verfahren zum Detektieren einer ionisierbaren Substanz in einem Gas (G) unter Verwendung eines Photo-Ionisations-Detektors (100), der

- eine Strahlungsquelle (4),
- einen Messzellen-Träger (10) und
- mindestens zwei Messzellen (20.1, 20.2, 20.3), die auf dem Messzellen-Träger (10) montiert sind,

umfasst,

wobei jede Messzelle (20.1, 20.2, 20.3) jeweils eine Messelektrode (1.1, 1.2, 1.3) umfasst, die eine messbare elektrische Eigenschaft aufweist,
wobei jeder Messzelle (20.1, 20.2, 20.3) jeweils ein Zustand des Photo-Ionisations-Detektors (100) zugeordnet ist,
wobei der Photo-Ionisations-Detektor (100) nacheinander in mindestens zwei verschiedenen zugeordneten Zuständen betrieben wird,
wobei jeder Zustand, in dem der Photo-Ionisations-Detektor (100) betrieben wird, jeweils einer Messzelle (20.1, 20.2, 20.3) zugeordnet ist, und

wobei beim Betrieb des Photo-Ionisations-Detektors (100) in demjenigen Zustand, der einer Messzelle (20.1, 20.2, 20.3) zugeordnet ist, die Schritte durchgeführt werden, dass

- eine Fluidverbindung zwischen einer Umgebung des Photo-Ionisations-Detektors (100) und dieser Messzelle (20.1, 20.2, 20.3) hergestellt wird und das Gas (G) diese Messzelle (20.1, 20.2, 20.3) erreicht,
- die Strahlungsquelle (4) ionisierende elektromagnetische Strahlung auf den Messzellen-Träger (10) zu emittiert,
- wenigstens ein Teil der emittierten elektromagnetischen Strahlung diese Messzelle (20.1, 20.2, 20.3) erreicht,
- eine Ionisierung von ionisierbarer Substanz in dem Gas (G) die messbare elektrische Eigenschaft dieser Messzelle (20.1, 20.2, 20.3) wenigstens zeitweise verändert,
- diese Messzelle (20.1, 20.2, 20.3) abhängig von der elektrischen Eigenschaft ein Signal erzeugt,

wobei das Signal mit dem Vorhandensein und optional mit der Konzentration von ionisierbarer Substanz in dem Gas (G) korreliert, und

- die oder jede weitere Messzelle von der Umgebung getrennt wird oder ist.

**14.** Verfahren nach Anspruch 13,
**dadurch gekennzeichnet, dass**

der Photo-Ionisations-Detektor (100) ein Gehäuse (3) umfasst, welches den Messzellen-Träger (10) und die Messzellen (20.1, 20.2, 20.3) umgibt,

wobei in das Gehäuse (3) mindestens eine Öffnung (Ö.13, Ö.a, Ö.b, Ö.c) eingelassen ist,

wobei das Gehäuse (3) den Messzellen-Träger (10) und die Messzellen (20.1, 20.2, 20.3) dergestalt von der Umgebung trennt,

dass das Gas (G) nur durch die oder eine Öffnung (Ö.13, Ö.a, Ö.b, Ö.c) im Gehäuse (3) hindurch eine Messzelle (20.1, 20.2, 20.3) erreicht,

wobei beim Betrieb des Photo-Ionisations-Detektors (100) in demjenigen Zustand, der einer Messzelle (20.1, 20.2, 20.3) zugeordnet ist,

- das Gas (G) diese Messzelle (20.1, 20.2, 20.3) erreicht und
- die oder mindestens eine, bevorzugt jede andere Messzelle von der Umgebung getrennt ist, und

wobei das Verfahren die Schritte umfasst, dass

- der Photo-Ionisations-Detektor (100) in einem ersten Zeitraum in einem ersten Zustand betrieben wird, wird, das ist derjenige Zustand, der einer ersten Messzelle (20.1) zugeordnet ist, und
das Gas (G) in dem ersten Zeitraum die erste Messzelle (20.1) erreicht und
- der Photo-Ionisations-Detektor (100) in einem nachfolgenden zweiten Zeitraum in einem zweiten Zustand betrieben wird, das ist derjenige Zustand, der einer zweiten Messzelle (20.2) zugeordnet ist,

wobei die zweite Messzelle (20.2) eine andere Messzelle ist als die erste Messzelle (20.1), und
das Gas (G) in dem zweiten Zeitraum die zweite Messzelle (20.2) erreicht und

wobei zwischen dem ersten Zeitraum und dem zweiten Zeitraum

- die Messzellen (20.1, 20.2, 20.3) und / oder die oder mindestens eine Öffnung (Ö.13, Ö.a, Ö.b, Ö.c) relativ zum Gehäuse (3) bewegt werden und
- dadurch der Photo-Ionisations-Detektor (100) vom ersten Zustand in den zweiten Zustand überführt wird.

**Claims**

**1.** A photoionization detector (100) for detecting an ionizable substance in a gas (G),

wherein the photoionization detector (100) comprises

- a radiation source (4),
- a measuring cell carrier (10) and
- at least two measuring cells (20.1, 20.2, 20.3) mounted on the measuring cell carrier (10),

wherein the radiation source (4) is configured to emit ionizing electromagnetic radiation onto the measuring cell carrier (10),

wherein each measuring cell (20.1, 20.2, 20.3) is associated with a state of the photoionization detector (100),

wherein the photoionization detector (100) is selectively operable in any state associated with a measuring cell (20.1, 20.2, 20.3),

wherein the photoionization detector (100) is configured such that, when the photoionization detector (100) is operated in the state associated with a measuring cell (20.1, 20.2, 20.3),

- a fluid connection is established between an environment of the photoionization detector (100) and this measuring cell (20.1, 20.2, 20.3),
- at least a portion of the emitted electromagnetic radiation reaches this measuring cell (20.1, 20.2, 20.3), and
- the or each additional measuring cell is separated from the environment in a fluid-tight manner, and

wherein each measuring cell (20.1, 20.2, 20.3)

- comprises a measuring electrode (1.1, 1.2, 1.3) having a measurable electrical property,

wherein the electrical property is at least temporarily changed or can be changed by ionization of an ionizable substance in the gas (G), and

- is configured to generate a signal depending on the electrical property,

wherein the generated signal correlates with the presence and optionally with the concentration of ionizable substance in the gas (G).

2. The photoionization detector (100) according to claim 1,
**characterized in that**

each measuring cell (20.1, 20.2, 20.3) is associated with a concentration range,
wherein each measuring cell (20.1, 20.2, 20.3) is configured to generate the signal such that
the generated signal comprises at least the information as to whether or not the gas (G) contains an ionizable substance at a concentration within the associated concentration range,
wherein the generated signal preferably additionally comprises information about the concentration of the ionizable substance.

3. The photoionization detector (100) according to claim 2,
**characterized in that**

the measuring cells (20.1, 20.2, 20.3) are configured such that at least two concentration ranges differ from one another,
wherein these two concentration ranges are preferably disjointed from one another.

4. The photoionization detector (100) according to claim 3,
**characterized in that**

a first measuring cell (20.1) is associated with a first concentration range and a second measuring cell (20.2) is associated with a second concentration range,
wherein the lower limit of the first concentration range is smaller than the lower limit of the second concentration range, and
wherein the photoionization detector (100) is configured to automatically generate an error message if
- the second measuring cell (20.2) generates a signal that the gas (G) contains an ionizable substance, and
- the first measuring cell (20.1) does not generate such a signal or generates a signal that the gas (G) does not contain any ionizable substance.

5. The photoionization detector (100) according to any of the preceding claims,
**characterized in that**

the photoionization detector (100) comprises a housing (3),

wherein the housing surrounds the measuring cell carrier (10) and the measuring cells (20.1, 20.2, 20.3),
wherein at least one opening (0.13, Ö.a, Ö.b, Ö.c) is formed in the housing (3),
wherein the housing (3) separates the measuring cell carrier (10) and the measuring cells (20.1, 20.2, 20.3) from the environment such that
the gas (G) reaches a measuring cell (20.1, 20.2, 20.3) only through the or at least one opening (0.13, Ö.a, Ö.b, Ö.c) in the housing (3), and
wherein, when the photoionization detector (100) is operated in the state associated with a measuring cell (20.1, 20.2, 20.3),
- the gas (G) reaches this measuring cell (20.1, 20.2, 20.3) through the or an opening (0.13, Ö.a, Ö.b, Ö.c) in the housing (3), and
- the housing (3) separates the or at least one, preferably each other measuring cell from the environment in a fluid-tight manner.

6. The photoionization detector (100) according to claim 5,
**characterized in that**

a sequence of change times is predetermined, and
the photoionization detector (100) is configured such that

- between two immediately successive change times of the sequence, the photoionization detector (100) is operated in the state associated with a measuring cell (20.1, 20.2, 20.3), and
- both the gas (G) and at least a portion of the emitted electromagnetic radiation reach this measuring cell (20.1, 20.2, 20.3), and

the photoionization detector (100) is configured,
upon reaching a change time in the sequence,
to effect or allow a movement of the measuring cells (20.1, 20.2, 20.3) relative to the housing (3) or the or at least one opening (0.13, Ö.a, Ö.b, Ö.c) relative to the housing (3),
such that, after the change time has been reached,

- the photoionization detector (100) is operated in the state associated with another measuring cell (20.1, 20.2, 20.3), and
- the gas (G) and at least a portion of the emitted electromagnetic radiation reach this other measuring cell (20.1, 20.2, 20.3).

7. The photoionization detector (100) according to any of the preceding claims,
**characterized in that**

the measuring cell carrier (10), together with the measuring cells (20.1, 20.2, 20.3), is rotatable relative to the radiation source (4) about a rotational axis (MA),
wherein each measuring cell (20.1, 20.2, 20.3) on the measuring cell carrier (10) is associated with a particular rotational position of the measuring cell carrier (10) with respect to the rotational axis (MA), and
wherein the photoionization detector (100) is configured such that, when the measuring cell carrier (10) is in the rotational position associated with a measuring cell (20.1, 20.2, 20.3),
- a fluid connection is established between this measuring cell (20.1, 20.2, 20.3) and the environment of the photoionization detector (100),
- at least a portion of the emitted electromagnetic radiation reaches this measuring cell (20.1, 20.2, 20.3), and
- at least one other measuring cell, preferably each other measuring cell, is separated from the environment in a fluid-tight manner.

8. The photoionization detector (100) according to claim 7,
**characterized in that**

the photoionization detector (100) has an actuator (14) for rotating the measuring cell carrier (10) about the rotational axis (MA),
wherein the actuator (14) is configured to perform a sequence at least once,
wherein the actuator (14) rotates the measuring cell carrier (10) successively into each rotational position associated with a measuring cell (20.1, 20.2, 20.3) during the or each performance of the sequence.

9. The photoionization detector (100) according to claim 8,
**characterized in that**

a sequence of triggering times is predetermined,
wherein the photoionization detector (100) is configured to cause the actuator (14) to begin performing the sequence again at each triggering time.

10. The photoionization detector (100) according to any of the preceding claims,
**characterized in that**

the photoionization detector (100) comprises a diaphragm (15) with at least one opening (0.15),
wherein the diaphragm (15)

- is located between the measuring cell carrier (10) and an environment of the photoionization detector (100), and
- is rotatable relative to the measuring cell carrier (10) about a rotational axis (MA),

wherein each measuring cell (20.1, 20.2, 20.3) is associated with a particular rotational position of the diaphragm (15) with respect to the optical central axis (MA), and
wherein the photoionization detector (100) is configured such that, when the diaphragm (15) is in the rotational position associated with a measuring cell (20.1, 20.2, 20.3),

- a fluid connection is established between this measuring cell (20.1, 20.2, 20.3) and the environment of the photoionization detector (100), and
- at least a portion of the emitted electromagnetic radiation reaches this measuring cell (20.1, 20.2, 20.3),

wherein this fluid connection passes through the or an opening (0.15) in the diaphragm (15), and
wherein at least one other measuring cell, preferably each other measuring cell, is separated from the environment in a fluid-tight manner.

11. The photoionization detector (100) according to claim 10,
**characterized in that**

the photoionization detector (100) has an actuator (14) for rotating the diaphragm (15) about the rotational axis (MA),
wherein the actuator (14) is configured to perform a sequence at least once,
wherein, when performing the sequence, the actuator (14) rotates the diaphragm (15) successively into each rotational position associated with a measuring cell (20.1, 20.2, 20.3).

12. The photoionization detector (100) according to any of the preceding claims,
**characterized in that**

the photoionization detector (100) can be operated either in a monitoring mode or in a measuring mode,
wherein in the monitoring mode, exactly one measuring cell (20.1, 20.2, 20.3) is in fluid communication with the environment,
wherein in the measuring mode, at least two measuring cells are each simultaneously in fluid communication with the environment, and
wherein the photoionization detector (100) is configured such that
the event that the photoionization detector (100) operated in the monitoring mode has detected an ionizable substance
triggers the step of the photoionization detector (100) automatically switching to the measuring mode.

13. A method for detecting an ionizable substance in a gas (G) using a photoionization detector (100) comprising

- a radiation source (4),
- a measuring cell carrier (10) and
- at least two measuring cells (20.1, 20.2, 20.3) mounted on the measuring cell carrier (10),

wherein each measuring cell (20.1, 20.2, 20.3) comprises a measuring electrode (1.1, 1.2, 1.3) having a measurable electrical property,
wherein each measuring cell (20.1, 20.2, 20.3) is associated with a state of the photoionization detector (100),
wherein the photoionization detector (100) is operated successively in at least two different associated states,
wherein each state in which the photoionization detector (100) is operated is associated with a particular measuring cell (20.1, 20.2, 20.3), and
wherein, when the photoionization detector (100) is operated in the state associated with a measuring cell (20.1, 20.2, 20.3), the following steps are carried out, whereby:

- a fluid connection is established between an environment of the photoionization detector (100) and this measuring cell (20.1, 20.2, 20.3), and the gas (G) reaches this measuring cell (20.1, 20.2, 20.3),
- the radiation source (4) emits ionizing electromagnetic radiation onto the measuring cell carrier (10),
- at least a portion of the emitted electromagnetic radiation reaches this measuring cell (20.1, 20.2, 20.3),
- ionization of an ionizable substance in the gas (G) changes the measurable electrical property of this measuring cell (20.1, 20.2, 20.3) at least temporarily,
- this measuring cell (20.1, 20.2, 20.3) generates a signal depending on the electrical property,

wherein the signal correlates with the presence and optionally with the concentration of an ionizable substance in the gas (G), and

- the or each additional measuring cell becomes or is separated from the environment.

**14.** The method according to claim 13,
**characterized in that**

the photoionization detector (100) comprises a housing (3) which surrounds the measuring cell carrier (10) and the measuring cells (20.1, 20.2, 20.3),
wherein at least one opening (0.13, Ö.a, Ö.b, Ö.c) is formed in the housing (3),
wherein the housing (3) separates the measuring cell carrier (10) and the measuring cells (20.1, 20.2, 20.3) from the environment such that
the gas (G) reaches a measuring cell (20.1, 20.2, 20.3) only through the or an opening (0.13, Ö.a, Ö.b, Ö.c) in the housing (3),
wherein, when the photoionization detector (100) is operated in the state associated with a measuring cell (20.1, 20.2, 20.3),

- the gas (G) reaches this measuring cell (20.1, 20.2, 20.3), and
- the or at least one, preferably each other measuring cell is separated from the environment, and

wherein the method comprises the following steps whereby:

- the photoionization detector (100) is operated in a first state during a first time period, that is, the state associated with a first measuring cell (20.1), and

the gas (G) reaches the first measuring cell (20.1) during the first time period, and

- the photoionization detector (100) is operated in a second state in a subsequent second time period, which is the state associated with a second measuring cell (20.2),

wherein the second measuring cell (20.2) is a different measuring cell than the first measuring cell (20.1), and
the gas (G) reaches the second measuring cell (20.2) in the second time period, and
wherein between the first time period and the second time period,

- the measuring cells (20.1, 20.2, 20.3) and/or the or at least one opening (0.13, Ö.a, Ö.b, Ö.c) are moved relative to the housing (3), and
- the photoionization detector (100) is thereby transferred from the first state to the second state.

**Revendications**

1. Détecteur à photo-ionisation (100) permettant de détecter une substance ionisable dans un gaz (G),

   dans lequel le détecteur à photo-ionisation (100) comprend

   - une source de rayonnement (4),
   - un support pour cellules de mesure (10) et
   - au moins deux cellules de mesure (20.1, 20.2, 20.3) montées sur le support pour cellules de mesure (10),

   dans lequel la source de rayonnement (4) est configurée pour émettre un rayonnement électromagnétique ionisant sur le support pour cellules de mesure (10),
   dans lequel respectivement un état du détecteur à photo-ionisation (100) est associé à chaque cellule de mesure (20.1, 20.2, 20.3),
   dans lequel le détecteur à photo-ionisation (100) peut fonctionner au choix dans chaque état associé à une cellule de mesure (20.1, 20.2, 20.3),
   dans lequel le détecteur à photo-ionisation (100) est conçu de sorte que, lors du fonctionnement du détecteur à photo-ionisation (100) dans l'état qui est associé à une cellule de mesure (20.1, 20.2, 20.3),

   - une liaison fluidique est établie entre un environnement du détecteur à photo-ionisation (100) et ladite cellule de mesure (20.1, 20.2, 20.3),
   - au moins une partie du rayonnement électromagnétique émis atteint ladite cellule de mesure (20.1, 20.2, 20.3) et
   - la cellule de mesure ou chaque autre cellule de mesure est séparée de l'environnement de manière étanche aux fluides et

   dans lequel chaque cellule de mesure (20.1, 20.2, 20.3)

   - comprend respectivement une électrode de mesure (1.1, 1.2, 1.3) qui présente une propriété électrique mesurable,

   dans lequel la propriété électrique est modifiée ou peut être modifiée au moins temporairement par une ionisation de substance ionisable dans le gaz (G), et

   - est configuré pour générer un signal en fonction de la propriété électrique,

   dans lequel le signal généré est corrélé à la présence et, éventuellement, à la concentration de substance ionisable dans le gaz (G).

2. Détecteur à photo-ionisation (100) selon la revendication 1,
   **caractérisé en ce que**

   respectivement une plage de concentrations est associée à chaque cellule de mesure (20.1, 20.2, 20.3),
   dans lequel chaque cellule de mesure (20.1, 20.2, 20.3) est configurée pour générer le signal de sorte que le signal généré comprend au moins les informations selon lesquelles le gaz (G) contient ou non une substance ionisable comportant une concentration qui se situe dans la plage de concentrations associée,
   dans lequel, de préférence, le signal généré comprend en outre des informations concernant la concentration de substance ionisable.

3. Détecteur à photo-ionisation (100) selon la revendication 2,
   **caractérisé en ce que**

   les cellules de mesure (20.1, 20.2, 20.3) sont configurées de sorte qu'au moins deux plages de concentrations se distinguent l'une de l'autre,
   dans lequel, de préférence, lesdites deux plages de concentrations sont séparées l'une de l'autre.

4. Détecteur à photo-ionisation (100) selon la revendication 3,
   **caractérisé en ce que**

une première plage de concentrations est associée à une première cellule de mesure (20.1) et une seconde plage de concentrations est associée à une seconde cellule de mesure (20.2),

dans lequel la limite inférieure de la première plage de concentrations est inférieure à la limite inférieure de la seconde plage de concentrations et

dans lequel le détecteur à photo-ionisation (100) est configuré pour générer automatiquement un message d'erreur lorsque

- la seconde cellule de mesure (20.2) génère un signal selon lequel le gaz (G) contient une substance ionisable, et
- la première cellule de mesure (20.1) ne produit pas un tel signal ou produit un signal selon lequel aucune substance ionisable n'est contenue dans le gaz (G).

5. Détecteur à photo-ionisation (100) selon l'une des revendications précédentes, **caractérisé en ce que**

le détecteur à photo-ionisation (100) comprend un boîtier (3),

dans lequel le boîtier entoure le support pour cellules de mesure (10) et les cellules de mesure (20.1, 20.2, 20.3),

dans lequel au moins une ouverture (0.13, Ö.a, Ö.b, Ö.c) est ménagée dans le boîtier (3),

dans lequel le boîtier (3) sépare le support pour cellules de mesure (10) et les cellules de mesure (20.1, 20.2, 20.3) de l'environnement de sorte que

le gaz (G) n'atteint une cellule de mesure (20.1, 20.2, 20.3) qu'en passant par l'ouverture ou au moins une ouverture (0.13, Ö.a, Ö.b, Ö.c) dans le boîtier (3), et

dans lequel, lors du fonctionnement du détecteur à photo-ionisation (100) dans l'état qui est associé à une cellule de mesure (20.1, 20.2, 20.3),

- le gaz (G) atteint ladite cellule de mesure (20.1, 20.2, 20.3) en passant par l'ouverture ou une ouverture (0.13, Ö.a, Ö.b, Ö.c) dans le boîtier (3) et
- le boîtier (3) sépare de manière étanche aux fluides la cellule de mesure ou au moins une cellule de mesure, de préférence chaque autre cellule de mesure, de l'environnement.

6. Détecteur à photo-ionisation (100) selon la revendication 5, **caractérisé en ce que**

une séquence de moments de changement est prédéfinie et
le détecteur à photo-ionisation (100) est configuré de sorte que

- entre deux moments de modification immédiatement successifs de la séquence, le détecteur à photo-ionisation (100) fonctionne dans l'état qui est associé à une cellule de mesure (20.1, 20.2, 20.3), et
- à la fois le gaz (G) et au moins une partie du rayonnement électromagnétique émis atteignent ladite cellule de mesure (20.1, 20.2, 20.3), et

le détecteur à photo-ionisation (100) est configuré pour provoquer ou rendre possible,
lorsqu'un moment de changement de la séquence est atteint,
par un mouvement des cellules de mesure (20.1, 20.2, 20.3) par rapport au boîtier (3) ou de l'ouverture ou d'au moins une ouverture (0.13, Ö.a, Ö.b, Ö.c) par rapport au boîtier (3),
le fait
qu'après le moment de changement atteint

- le détecteur à photo-ionisation (100) fonctionne dans l'état qui est associé à une autre cellule de mesure (20.1, 20.2, 20.3) et
- le gaz (G) et au moins une partie du rayonnement électromagnétique émis atteignent ladite autre cellule de mesure (20.1, 20.2, 20.3).

7. Détecteur à photo-ionisation (100) selon l'une des revendications précédentes, **caractérisé en ce que**

le support pour cellules de mesure (10), conjointement avec les cellules de mesure (20.1, 20.2, 20.3), peut tourner autour d'un axe de rotation (MA) par rapport à la source de rayonnement (4),
dans lequel respectivement une position de rotation du support pour cellules de mesure (10) par rapport à l'axe de rotation (MA) est associée à chaque cellule de mesure (20.1, 20.2, 20.3) sur le support pour cellules de mesure (10) et

dans lequel le détecteur à photo-ionisation (100) est conçu de sorte que, lorsque le support pour cellules de mesure (10) se trouve dans la position de rotation associée à une cellule de mesure (20.1, 20.2, 20.3),

- une liaison fluidique est établie entre ladite cellule de mesure (20.1, 20.2, 20.3) et l'environnement du détecteur à photo-ionisation (100),
- au moins une partie du rayonnement électromagnétique émis atteint ladite cellule de mesure (20.1, 20.2, 20.3) et
- au moins une autre cellule de mesure, de préférence chaque autre cellule de mesure, est séparée de l'environnement de manière étanche aux fluides.

8. Détecteur à photo-ionisation (100) selon la revendication 7,
**caractérisé en ce que**

le détecteur à photo-ionisation (100) présente un actionneur (14) permettant de faire tourner le support pour cellules de mesure (10) autour de l'axe de rotation (MA),
dans lequel l'actionneur (14) est conçu pour exécuter au moins une fois une séquence,
dans lequel l'actionneur (14) fait tourner le support pour cellules de mesure (10) successivement dans chaque position de rotation associée à une cellule de mesure (20.1, 20.2, 20.3) lors de l'exécution ou de chaque exécution de la séquence.

9. Détecteur à photo-ionisation (100) selon la revendication 8,
**caractérisé en ce que**

une séquence de moments de déclenchement est prédéfinie,
dans lequel le détecteur à photo-ionisation (100) est conçu de sorte que l'actionneur (14) commence à nouveau l'exécution de la séquence à chaque moment de déclenchement.

10. Détecteur à photo-ionisation (100) selon l'une des revendications précédentes,
**caractérisé en ce que**

le détecteur à photo-ionisation (100) comprend un diaphragme (15) comportant au moins une ouverture (0.15),
dans lequel le diaphragme (15)

- se trouve entre le support pour cellules de mesure (10) et un environnement du détecteur à photo-ionisation (100) et
- peut tourner par rapport au support pour cellules de mesure (10) autour d'un axe de rotation (MA),

dans lequel respectivement une position de rotation du diaphragme (15) par rapport à l'axe optique central (MA) est associée à chaque cellule de mesure (20.1, 20.2, 20.3) et
dans lequel le détecteur à photo-ionisation (100) est conçu de sorte que, lorsque le diaphragme (15) est dans la position de rotation associée à une cellule de mesure (20.1, 20.2, 20.3),

- une liaison fluidique est établie entre ladite cellule de mesure (20.1, 20.2, 20.3) et l'environnement du détecteur à photo-ionisation (100) et
- au moins une partie du rayonnement électromagnétique émis atteint ladite cellule de mesure (20.1, 20.2, 20.3),

dans lequel ladite liaison fluidique passe par l'ouverture ou une ouverture (0.15) dans le diaphragme (15), et
dans lequel au moins une autre cellule de mesure, de préférence chaque autre cellule de mesure, est séparée de l'environnement de manière étanche aux fluides.

11. Détecteur à photo-ionisation (100) selon la revendication 10,
**caractérisé en ce que**

le détecteur à photo-ionisation (100) présente un actionneur (14) permettant de faire tourner le diaphragme (15) autour de l'axe de rotation (MA),
dans lequel l'actionneur (14) est conçu pour exécuter au moins une fois une séquence,
dans lequel l'actionneur (14), lors de l'exécution de la séquence, fait tourner le diaphragme (15) successivement dans chaque position de rotation associée à une cellule de mesure (20.1, 20.2, 20.3).

**12.** Détecteur à photo-ionisation (100) selon l'une des revendications précédentes,
**caractérisé en ce que**

le détecteur à photo-ionisation (100) peut fonctionner au choix dans un mode de surveillance ou dans un mode de mesure,

dans lequel, dans le mode de surveillance, exactement une cellule de mesure (20.1, 20.2, 20.3) est en liaison fluidique avec l'environnement,

dans lequel, dans le mode de mesure, au moins deux cellules de mesure sont simultanément respectivement en liaison fluidique avec l'environnement et

dans lequel le détecteur à photo-ionisation (100) est configuré de sorte que

l'événement selon lequel le détecteur à photo-ionisation (100) fonctionnant dans le mode de surveillance a détecté une substance ionisable

déclenche l'étape selon laquelle le détecteur à photo-ionisation (100) commute automatiquement dans le mode de mesure.

**13.** Procédé pour la détection d'une substance ionisable dans un gaz (G) à l'aide d'un détecteur à photo-ionisation (100) qui comprend

- une source de rayonnement (4),
- un support pour cellules de mesure (10) et
- au moins deux cellules de mesure (20.1, 20.2, 20.3) montées sur le support pour cellules de mesure (10),

dans lequel chaque cellule de mesure (20.1, 20.2, 20.3) comprend respectivement une électrode de mesure (1.1, 1.2, 1.3) qui présente une propriété électrique mesurable,

dans lequel respectivement un état du détecteur à photo-ionisation (100) est associé à chaque cellule de mesure (20.1, 20.2, 20.3),

dans lequel le détecteur à photo-ionisation (100) fonctionne successivement dans au moins deux états associés différents,

dans lequel chaque état dans lequel le détecteur à photo-ionisation (100) fonctionne est respectivement associé à une cellule de mesure (20.1, 20.2, 20.3), et

dans lequel, lors du fonctionnement du détecteur à photo-ionisation (100) dans l'état qui est associé à une cellule de mesure (20.1, 20.2, 20.3), on exécute les étapes selon lesquelles

- une liaison fluidique est établie entre un environnement du détecteur à photo-ionisation (100) et ladite cellule de mesure (20.1, 20.2, 20.3) et le gaz (G) atteint ladite cellule de mesure (20.1, 20.2, 20.3),
- la source de rayonnement (4) émet un rayonnement électromagnétique ionisant sur le support pour cellules de mesure (10),
- au moins une partie du rayonnement électromagnétique émis atteint ladite cellule de mesure (20.1, 20.2, 20.3),
- une ionisation de substance ionisable dans le gaz (G) modifie au moins temporairement la propriété électrique mesurable de ladite cellule de mesure (20.1, 20.2, 20.3),
- ladite cellule de mesure (20.1, 20.2, 20.3) génère un signal en fonction de la propriété électrique,

dans lequel le signal est corrélé à la présence et, éventuellement, à la concentration de substance ionisable dans le gaz (G), et

- la cellule de mesure ou chaque autre cellule de mesure est séparée de l'environnement.

**14.** Procédé selon la revendication 13,
**caractérisé en ce que**

le détecteur à photo-ionisation (100) comprend un boîtier (3) qui entoure le support pour cellules de mesure (10) et les cellules de mesure (20.1, 20.2, 20.3),

dans lequel au moins une ouverture (0.13, Ö.a, Ö.b, Ö.c) est ménagée dans le boîtier (3),

dans lequel le boîtier (3) sépare le support pour cellules de mesure (10) et les cellules de mesure (20.1, 20.2, 20.3) de l'environnement de sorte que

le gaz (G) n'atteint une cellule de mesure (20.1, 20.2, 20.3) qu'en passant par l'ouverture ou une ouverture (0.13, Ö.a, Ö.b, Ö.c) dans le boîtier (3),

dans lequel, lors du fonctionnement du détecteur à photo-ionisation (100) dans l'état qui est associé à une cellule de mesure (20.1, 20.2, 20.3),

- le gaz (G) atteint ladite cellule de mesure (20.1, 20.2, 20.3) et
- la cellule de mesure ou au moins une cellule de mesure, de préférence chaque autre cellule de mesure, est séparée de l'environnement, et

dans lequel le procédé comprend les étapes selon lesquelles

- le détecteur à photo-ionisation (100) fonctionne dans un premier état pendant une première période, lequel état est l'état associé à une première cellule de mesure (20.1), et

le gaz (G) atteint la première cellule de mesure (20.1) lors de la première période et

- le détecteur à photo-ionisation (100) fonctionne dans un second état pendant une seconde période suivante, lequel état est l'état associé à une seconde cellule de mesure (20.2),

dans lequel la seconde cellule de mesure (20.2) est une cellule de mesure différente de la première cellule de mesure (20.1), et
le gaz (G) atteint la seconde cellule de mesure (20.2) lors de la seconde période et
dans lequel, entre la première période et la seconde période,

- les cellules de mesure (20.1, 20.2, 20.3) et/ou l'ouverture ou au moins une ouverture (0.13, Ö.a, Ö.b, Ö.c) sont déplacées par rapport au boîtier (3) et
- le détecteur à photo-ionisation (100) est ainsi transféré du premier état au second état.

**FIG. 1**

EP 4 231 005 B1

FIG. 2

EP 4 231 005 B1

EP 4 231 005 B1

**FIG. 3**

EP 4 231 005 B1

**FIG. 4**

FIG. 5

100

Ö.15

MA

20.1

15

13

10

3

20.2

20.3

St

4

11

14

30

**FIG. 6**

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10101298 B1
- WO 9427141 A1
- DE 19828903 A1